# EUROPEAN PATENT APPLICATION

(11) **EP 3 487 182 A1**
(43) Date of publication of application: **22.05.2019**
(21) Application number: 17827445.2
(22) Date of filing: 30.06.2017
(51) Int. Cl.: H04N 21/462, H04H 60/31, H04H 60/66, H04H 60/82, H04N 17/00, H04N 21/436, H04H 20/08

(54) **INFORMATION PROCESSING APPARATUS AND INFORMATION PROCESSING METHOD**

(30) Priority: 15.07.2016 JP 2016140379
(71) Applicant: Sony Corporation, Tokyo 108-0075 (JP)
(72) Inventor: YAMAGISHI Yasuaki, Tokyo 108-0075 (JP)
(74) Representative: 2SPL Patentanwälte PartG mbB
(86) International application number: PCT/JP2017/024103
(87) International publication number: WO 2018/012315

(57) **Abstract**

The present technology relates to an information processing apparatus and an information processing method that enable flexible operation regarding a viewing history.

An information processing apparatus generates viewing history information associated with a viewing history of content of digital broadcasting, the viewing history information including device information indicating whether a device that has reproduced the content is a device capable of processing data conforming to a standard for the digital broadcasting. Accordingly, the information processing apparatus can perform an operation regarding a viewing history. The present technology can be applied to, for example, a device that is an object of the operation regarding a viewing history.

## Description

### TECHNICAL FIELD

The present technology relates to an information processing apparatus and an information processing method, and in particular, to an information processing apparatus and an information processing method that enable flexible operation regarding a viewing history.

### BACKGROUND ART

In the field of broadcasting, an operation regarding a viewing history such as collecting and analyzing the viewing history of content viewed by a user may be performed in some cases. For example, a technology for transmitting a viewing history periodically or when necessary is disclosed (for example, refer to Patent Document 1).

### CITATION LIST

### PATENT DOCUMENT

Patent Document 1: Japanese Patent Application Laid-Open No. 2009-278651

### SUMMARY OF THE INVENTION

### PROBLEMS TO BE SOLVED BY THE INVENTION

Meanwhile, since a technical method for performing an operation regarding a viewing history is not established, a proposal for flexibly performing the operation regarding the viewing history has been requested.

The present technology has been made in view of such a situation, and is intended to flexibly perform the operation regarding the viewing history.

### SOLUTIONS TO PROBLEMS

An information processing apparatus according to a first aspect of the present technology is an information processing apparatus including: a viewing history processing unit that generates viewing history information associated with a viewing history of content of digital broadcasting, the viewing history information including device information indicating whether a device that has reproduced the content is a device capable of processing data conforming to a standard for the digital broadcasting.

The information processing apparatus according to the first aspect of the present technology may be an independent device or an internal block constituting one device. Furthermore, an information processing method according to the first aspect of the present technology is an information processing method corresponding to the information processing apparatus according to the first aspect of the present technology described above.

In the information processing apparatus and the information processing method according to the first aspect of the present technology, there is generated viewing history information associated with a viewing history of content of digital broadcasting, the viewing history information including device information indicating whether a device that has reproduced the content is a device capable of processing data conforming to the standard for the digital broadcasting.

An information processing apparatus according to a second aspect of the present technology is an information processing apparatus including: a receiving unit that receives viewing history information associated with a viewing history of content of digital broadcasting, the viewing history information including device information indicating whether a device that has reproduced the content is a device capable of processing data conforming to a standard for the digital broadcasting, and a processing unit that collects the viewing history information from a plurality of devices and processes the plurality of pieces of collected viewing history information in response to the device information.

The information processing apparatus according to the second aspect of the present technology may be an independent device or an internal block constituting one device. Furthermore, an information processing method according to the second aspect of the present technology is an information processing method corresponding to the information processing apparatus according to the second aspect of the present technology described above.

In the information processing apparatus and the information processing method according to the second aspect of the present technology, viewing history information associated with a viewing history of content of digital broadcasting is received, the viewing history information including device information indicating whether a device that has reproduced the content is a device capable of processing data conforming to a standard for the digital broadcasting, and the viewing history information from a plurality of devices is collected and the plurality of pieces of collected viewing history information is processed in response to the device information.

### EFFECTS OF THE INVENTION

According to the first and second aspects of the present technology, it is possible to flexibly perform an operation regarding a viewing history.

Note that the effects of the present technology described herein are not necessarily limited but may include any effect described in the present disclosure.

### BRIEF DESCRIPTION OF THE DRAWINGS

Fig. 1 is a diagram illustrating an example of a protocol stack corresponding to an IP transmission scheme.
Fig. 2 is a diagram illustrating a configuration of a transmission system compliant with the IP transmission scheme.
Fig. 3 is a diagram illustrating an example of a format of a current CDM.
Fig. 4 is a diagram for explaining a detailed content of DeviceInfo.
Fig. 5 is a diagram illustrating a configuration of one embodiment of a transmission system to which the present technology is applied.
Fig. 6 is a diagram illustrating an example of a format of a CDM of the present technology.
Fig. 7 is a diagram illustrating a description example of a CDM of an ATSC 3.0 non-compliant device.
Fig. 8 is a diagram illustrating a description example of the CDM of the ATSC 3.0 non-compliant device.
Fig. 9 is a diagram illustrating an example of a JSON schema of the CDM.
Fig. 10 is a diagram illustrating an example of the JSON schema of the CDM.
Fig. 11 is a diagram illustrating an example of the JSON schema of the CDM.
Fig. 12 is a diagram illustrating an example of the JSON schema of the CDM.
Fig. 13 is a diagram illustrating an example of a protocol between a UR server and a UR client.
Fig. 14 is a diagram illustrating a configuration example of the UR server.
Fig. 15 is a diagram illustrating an example of a SLT format.
Fig. 16 is a diagram illustrating an example of attribute values of a urlType attribute.
Fig. 17 is a flowchart illustrating a flow of viewing history information correspondence processing.
Fig. 18 is a flowchart illustrating a flow of viewing history information correspondence processing.
Fig. 19 is a diagram illustrating a description example of the CDM of an ATSC 3.0 compliant device.
Fig. 20 is a diagram illustrating a configuration example of a computer.

### DETAILED DESCRIPTION OF THE INVENTION

Hereinafter, an embodiment of the present technology will be described with reference to the drawings. Note that the description will be given in the following order.

1. Outline of present technology
2. System configuration
3. Viewing history information (CDM) of present technology
4. Protocol between Usage Reporting devices
5. Flow of viewing history information correspondence processing
6. Modified Example
7. Computer Configuration

### <1. Outline of present technology>

At present, a MPEG2-TS (Transport Stream) scheme is widely used as a transmission scheme of digital broadcasting; however, in the future, it is assumed that an IP transmission scheme using Internet Protocol (IP) packets used in a communication field for digital broadcasting will become popular. For example, even in Advanced Television Systems Committee (ATSC) 3.0 which is one of the next generation terrestrial broadcast standards, it is expected to be able to provide more sophisticated services by adopting the IP transmission scheme.

### (Example of protocol stack)

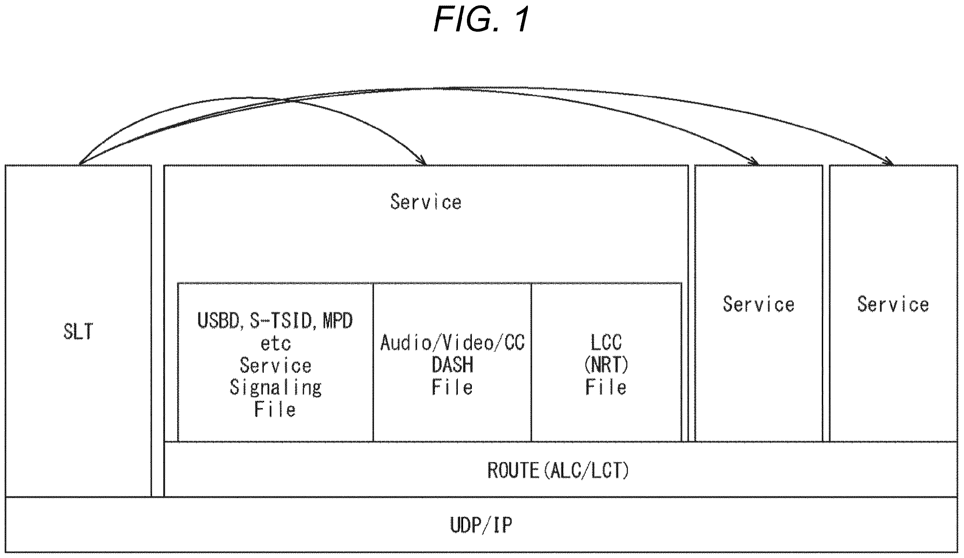

Fig. 1 is a diagram illustrating an example of a protocol stack corresponding to the IP transmission scheme.

In the protocol stack of Fig. 1, an upper layer of a physical layer (PHY: Physical Layer) and a MAC layer is a UDP/IP layer. The UDP/IP layer is a layer corresponding to a network layer and a transport layer in a hierarchical model of communication, and an IP packet and a User Datagram Protocol (UDP) packet are specified by an IP address and a port number.

Here, in ATSC 3.0, it is assumed that a low level signaling (LLS) and a service layer signaling (SLS) are used as signaling. The LLS is a signaling transmitted on a lower layer than the SLS. The SLS is service unit signaling. That is, in ATSC 3.0, a signaling in the transport layer is transmitted in two layers, the LLS and the SLS.

The LLS is stored in a UDP/IP packet and transmitted. The LLS includes metadata such as a service list table (SLT). SLT metadata includes basic information indicating a configuration of streams and services in a broadcasting network, such as information necessary for tuning a service (channel). This SLT metadata is transmitted by being included in a UDP/IP packet which is an IP packet including a UDP packet.

An upper layer adjacent to the UDP/IP layer is a ROUTE (Real-Time Object Delivery over Unidirectional Transport). The ROUTE is a protocol for streaming file transfer, and is obtained by extending a FLUTE (File Delivery over Unidirectional Transport).

With this ROUTE session, for each service (Service), a SLS file (Service Signaling File), a DASH segment file (Audio/Video/CC DASH file), a locally cached content (LCC) file (LCC (NRT) file), and the like are transmitted.

The SLS is a service level signaling and provides information and an attribute necessary for searching for and selecting components belonging to a target service. The SLS includes metadata such as a user service bundle description (USBD), a service-based transport session instance description (S-TSID), and a media presentation description (MPD).

The USBD metadata includes information such as an acquisition destination of other metadata.

The S-TSID metadata is obtained by extending an LCT session instance description (LSID) for ATSC 3.0 and is control information of a ROUTE protocol. Furthermore, the S-TSID metadata can specify an extended FDT (EFDT) transmitted in a ROUTE session. The EFDT is obtained by extending a file delivery table (FDT) introduced by the FLUTE, and is control information for transfer.

The MPD metadata is control information of video and audio files used for streaming delivery conforming to MPEG-DASH. Here, the MPEG-DASH is a streaming distribution standard conforming to an over the top video (OTT-V), and is a standard related to adaptive streaming delivery using a streaming protocol on the basis of a Hypertext Transfer Protocol (HTTP).

According to this MPEG-DASH standard, a manifest file for describing metadata that is control information of video and audio files and a file format for transmitting content of a moving image are stipulated. Here, the former manifest file is referred to as a Media Presentation Description (MPD), and the latter file format is also referred to as a segment format.

Furthermore, in a case where the ROUTE is used as a transport protocol, an MP4 file format can be used as a streaming file format. The MP4 file format is a derivative format of an ISO base media file format (ISO BMFF) stipulated by ISO/IEC 14496-12. The ISO BMFF includes a tree structure called Box.

The segment transmitted in the ROUTE session includes an initialization segment (IS) and a media segment (MS). The initialization segment includes initialization information such as a data compression scheme. Furthermore, the media segment stores data such as video, audio, and subtitle streams. Note that this media segment corresponds to the DASH segment (DASH segment file).

Note that the SLT metadata as LLS and the metadata such as USBD, S-TSID, MPD, as SLS, and the like may be data in a text format described in a markup language such as XML (Extensible Markup Language), for example.

In this manner, streams of video, audio, and subtitles, streams of SLS, and streams of LCC content transmitted in the ROUTE session are stored in the UDP/IP packet and transmitted. Note that the LCC content is temporarily stored in a storage of a receiver and then reproduced Furthermore, files other than the LCC content (for example, files of the application) may be transmitted in the ROUTE session.

### (Configuration of transmission system)

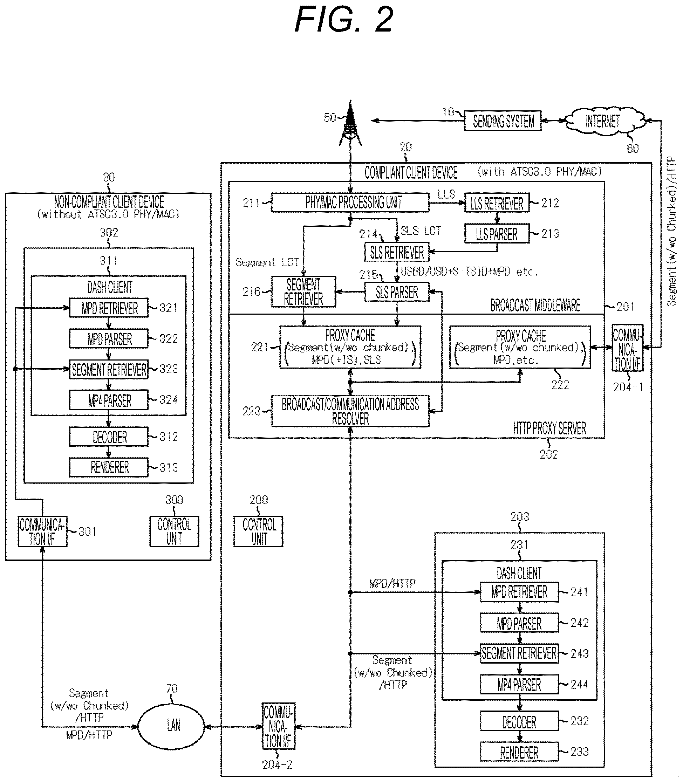

Fig. 2 is a diagram illustrating a configuration of a transmission system compliant with the IP transmission scheme. Here, as an example of the IP transmission scheme, an implementation model of a transmission system compliant with ATSC 3.0 will be described. Note that a term "system" means a group of a plurality of apparatuses logically gathered.

The transmission system of Fig. 2 includes a sending system 10, a compliant client device 20, and a non-compliant client device 30. The compliant client device 20 is mutually connected to the sending system 10 via an Internet 60. In addition, the compliant client device 20 is mutually connected to the non-compliant client device 30 via a LAN 70 such as a home local area network (LAN).

The sending system 10 is a system for distributing content such as a television program via a predetermined transmission path. Here, as the transmission path, in addition to a broadcast transmission path such as a terrestrial wave, there is a communication transmission path such as the Internet 60.

The sending system 10 processes content such as a television program as data conforming to ATSC 3.0, and sends (broadcast all at once) the data as a broadcast wave of a digital broadcasting to a plurality of compliant client devices 20 via a relay station 50. Furthermore, the sending system 10 processes content such as a television program as data for streaming distribution, and sends (streaming distribution) the data to the compliant client device 20 via the Internet 60.

The compliant client device 20 is an electronic device (ATSC 3.0 compliant device) capable of processing data conforming to ATSC 3.0. For example, the compliant client device 20 includes a fixed receiver such as a television receiver, a gateway, a network storage, a set top box, or the like.

The compliant client device 20 includes a control unit 200, a broadcast middleware 201, a HTTP proxy server 202, a browser 203, and a communication I/F 204-1 and 204-2.

The control unit 200 includes, for example, a central processing unit (CPU), a microprocessor, or the like. The control unit 200 controls the operation of each unit of the compliant client device 20.

The broadcast middleware 201 is a client local ATSC middleware in which a broadcasting reception stack is implemented. In accordance with a control of the control unit 200, the broadcast middleware 201 receives the broadcast wave of the digital broadcasting from the sending system 10 and processes the data obtained from the broadcast wave.

The broadcast middleware 201 includes a PHY/MAC processing unit 211, an LLS retriever 212, an LLS parser 213, an SLS retriever 214, an SLS parser 215, and a segment retriever 216.

The PHY/MAC processing unit 211 includes, for example, a tuner, a demodulator, or the like. The PHY/MAC processing unit 211 performs processing on a physical layer frame obtained from the broadcast wave. An ALP (ATSC Link-Layer Protocol) packet is extracted from a data portion of the physical layer frame, and moreover, a UDP/IP packet is obtained from a payload of the ALP packet.

The LLS retriever 212 acquires LLS (SLT metadata) included in the UDP/IP packet from the data processed by the PHY/MAC processing unit 211, and supplies the LLS to the LLS parser 213. The LLS parser 213 parses the LLS (SLT metadata) from the LLS retriever 212 and supplies the parsed result to the SLS retriever 214.

On the basis of the parsed result of the LLS from the LLS parser 213, the SLS retriever 214 acquires SLS (metadata such as USBD, S-TSID) included in the stream of the ROUTE session transmitted as the UDP/IP packet (LCT packet included in the UDP/IP packet) from the data processed by the PHY/MAC processing unit 211, and supplies the SLS to the SLS parser 215.

The SLS parser 215 parses the SLS (metadata such as USBD, S-TSID, and the like) from the SLS retriever 214 and supplies the parsed result to the segment retriever 216 and (a proxy cache 221 of) the HTTP proxy server 202.

On the basis of the parsed result of the SLS from the SLS parser 215, the segment retriever 216 acquires a DASH segment file included in the stream of the ROUTE session transmitted as the UDP/IP packet (LCT packet included in the UDP/IP packet) from the data processed by the PHY/MAC processing unit 211, and supplies the DASH segment file to (the proxy cache 221 of) the HTTP proxy server 202.

The HTTP proxy server 202 is a client local HTTP proxy server mounted on the compliant client device 20. In accordance with the control from the control unit 200, the HTTP proxy server 202 supplies the DASH segment file and SLS file received by the broadcast middleware 201 that performs broadcast system reception processing or the communication I/F 204-1 that performs communication system reception processing to the application that reproduces the content.

The HTTP proxy server 202 includes the proxy cache 221, a proxy cache 222, and a broadcast/communication address resolver 223.

The proxy cache 221 acquires files of the DASH segment and the MPD metadata from the broadcast middleware 201. The proxy cache 222 acquires files of the DASH segment and the MPD metadata received by the communication I/F 204-1. Note that in accordance with the control from the control unit 200, the communication I/F 204-1 receives the files of the DASH segment and the MPD metadata as streaming-distributed data from the sending system 10 via the Internet 60.

In response to a request from an ATSC 3.0 client application (for example, a DASH client 231 or a DASH client 311), the broadcast/communication address resolver 223 supplies the files of the DASH segment and the MPD metadata acquired by the proxy cache 221 or the proxy cache 222 to the browser 203 or the communication I/F 204-2.

Specifically, when the ATSC 3.0 client application requests (HTTP request) a file group of DASH segment or MPD metadata, in the HTTP proxy server 202 which has received the request, the broadcast/communication address resolver 223 determines whether to acquire the request via broadcasting (via a broadcast reception stack) or via communication (via a communication reception stack).

Information as a material of this determination is supplied from the SLS parser 215. In other words, the SLS parser 215 requests acquisition of USBD metadata, T-TSID metadata, and the like to the SLS retriever 214. The SLS retriever 214 extracts a signaling meta included in the LCT packet of the SLS received via the PHY/MAC processing unit 211.

The SLS parser 215 subtracts the signaling meta included in the LCT packet from a Uniform Resource Locator (URL) included in the request from the ATSC 3.0 client application, to solve broadcast distribution address information for acquiring a target file group. Then, if it is found that a distribution is carried out via broadcasting, based on the broadcast delivery address information, the segment retriever 216 acquires an LCT packet including the DASH segment file from the stream of the ROUTE session and develops the LCT packet in the proxy cache 221 of the HTTP proxy server 202.

The HTTP proxy server 202 returns the file group developed in the proxy cache 221 in this way as a response (HTTP response) to the request (HTTP request) from the ATSC 3.0 client application.

Note that in a case where the URL included in the request from the ATSC 3.0 client application does not exist in the signaling meta of the LCT packet, the HTTP proxy server 202 returns, as a response (HTTP response) to the request (HTTP request) from the ATSC 3.0 client application, the file group acquired via the communication reception stack expanded in the proxy cache 222.

The browser 203 is, for example, a browser compliant with a HyperText Markup Language 5 (HTML 5). In accordance with a control from the control unit 200, the browser 203 processes the files of the DASH segment and MPD metadata from the broadcast/communication address resolver 223, and reproduces the content distributed from the sending system 10.

The browser 203 includes the DASH client 231, a decoder 232, and a renderer 233. Further, the DASH client 231 includes an MPD retriever 241, an MPD parser 242, a segment retriever 243, and an MP4 parser 244.

The DASH client 231 is an ATSC 3.0 client application (ATSC 3.0 DASH Client) executed by the browser 203 mounted on the compliant client device 20. The DASH client 231 processes the files of the DASH segment and the MPD metadata received by the broadcast middleware 201 or the communication I/F 204-1 via the HTTP proxy server 202. Note that the DASH client 231 may be provided not only as an application executed on the browser 203 but also as a so-called native application.

The MPD retriever 241 acquires the MPD metadata file from the data supplied from (the broadcast/communication address resolver 223 of) the HTTP proxy server 202, and supplies the MPD metadata file to the MPD parser 242. The MPD parser 242 parses the MPD metadata from the MPD retriever 241 and supplies the parsed result to the segment retriever 243.

The segment retriever 243 acquires the DASH segment file from the data supplied from (the broadcast/communication address resolver 223 of) the HTTP proxy server 202 on the basis of the parsed result of the MPD metadata from the MPD parser 242, and supplies the DASH segment file to the MP4 parser 244.

The MP4 parser 244 parses the DASH segment file (segment) from the segment retriever 243 and supplies the parsed result to the decoder 232 together with the DASH segment file.

The decoder 232 decodes data obtained from the DASH segment file according to the parsed result from the MP4 parser 244 and supplies the resultant decoded data to the renderer 233. The renderer 233 performs rendering processing on the decoded data from the decoder 232.

An image corresponding to video data obtained by the rendering processing is displayed on a display such as a liquid crystal display (LCD) or an organic electroluminescence display (OELD), and sound corresponding to audio data is output from the speaker. Note that the display and the speaker may be provided in the compliant client device 20 or may be provided in an external device.

In accordance with the control from the control unit 200, the communication I/F 204-2 exchanges data with the non-compliant client device 30 via the LAN 70 such as a home LAN. Note that in Fig. 2, for convenience of explanation, although it is described that the communication I/F 204-2 is provided separately from the communication I/F 204-1, the communication I/F 204-1 and the communication I/F 204-2 can be configured as one communication interface circuit.

For example, in a case where the distribution of the content is requested from the non-compliant client device 30 via the LAN 70, the communication I/F 204-2 supplies the request to (the broadcast/communication address resolver 223 of) the HTTP proxy server 202.

In response to a request (HTTP request) from the communication I/F 204-2, the broadcast/communication address resolver 223 supplies the files of the DASH segment and the MPD metadata acquired by the proxy cache 221 or the proxy cache 222 to the communication I/F 204-2. Then, the communication I/F 204-2 sends the files of the DASH segment and the MPD metadata from the broadcast/communication address resolver 223 to the non-compliant client device 30 via the LAN 70.

The non-compliant client device 30 is an electronic device (ATSC 3.0 non-compliant device) incapable of processing data conforming to ATSC 3.0. For example, the non-compliant client device 30 includes a mobile receiver such as a smartphone, a mobile phone, a tablet computer, or the like.

The non-compliant client device 30 includes a control unit 300, a communication I/F 301, and a browser 302.

The control unit 300 includes, for example, a CPU, a microprocessor, or the like. The control unit 300 controls the operation of each unit of the non-compliant client device 30.

The communication I/F 301 includes, for example, a communication interface circuit or the like. In accordance with a control from the control unit 300, the communication I/F 301 exchanges data with the compliant client device 20 via the LAN 70 such as a home LAN.

For example, in a case of requesting distribution of content to the compliant client device 20, the communication I/F 301 sends the request (HTTP request) to the compliant client device 20 via the LAN 70. Accordingly, the communication I/F 301 receives the files of the DASH segment and the MPD metadata sent from the compliant client device 20 via the LAN 70, and supplies the files to the browser 302.

The browser 302 is, for example, a browser compliant with HTML 5. In accordance with the control from the control unit 300, the browser 302 processes the files of the DASH segment and the MPD metadata from the communication I/F 301 and reproduces the content sent from the compliant client device 20. Note that the content sent from the compliant client device 20 is the content distributed by the sending system 10.

The browser 302 includes the DASH client 311, a decoder 312, and a renderer 313. Furthermore, the DASH client 311 includes an MPD retriever 321, an MPD parser 322, a segment retriever 323, and an MP4 parser 324.

The DASH client 311 is an ATSC 3.0 client application (ATSC 3.0 DASH Client) executed by the browser 302 mounted on the non-compliant client device 30. The DASH client 311 processes the files of DASH segments and MPD metadata received by the communication I/F 301. Note that the DASH client 311 may be provided not only as an application executed on the browser 302 but also as a so-called native application.

The MPD retriever 321 acquires the MPD metadata file from data supplied from the communication I/F 301 and supplies the file to the MPD parser 322. The MPD parser 322 parses the MPD metadata from the MPD retriever 321 and supplies the parsed result to the segment retriever 323.

The segment retriever 323 acquires the DASH segment file from the data supplied from the communication I/F 301 on the basis of the parsed result of the MPD metadata from the MPD parser 322, and supplies the DASH segment file to the MP4 parser 324.

The MP4 parser 324 parses the DASH segment file (segment) from the segment retriever 323 and supplies the parsed result to the decoder 312 together with the DASH segment file.

The decoder 312 decodes data obtained from the DASH segment file according to the parsed result from the MP4 parser 324 and supplies the resultant decoded data to the renderer 313. The renderer 313 performs rendering processing on the decoded data from the decoder 312.

A video corresponding to video data obtained by this rendering processing is displayed on a display such as LCD or OELD, and a sound corresponding to audio data is output from the speaker. Note that the display and the speaker may be provided in the non-compliant client device 30 or may be provided in an external device.

The transmission system compliant with the IP transmission scheme is configured as described above.

In this transmission system, not only the compliant client device 20 that is an ATSC 3.0 compliant device but also the non-compliant client device 30 that is an ATSC 3.0 non-compliant device can also reproduce the content distributed from the sending system 10 conforming to ATSC 3.0.

That is, although the non-compliant client device 30 cannot process data conforming to ATSC 3.0, the DASH client 311 as an ATSC 3.0 client application can be mounted on the non-compliant client device 30. Then, the DASH client 311 processes the files of the DASH segment and MPD metadata obtained by the compliant client device 20, so that it is possible to reproduce the content delivered from the sending system 10.

Furthermore, at this time, for the DASH client 231 or the DASH client 311 as the ATSC 3.0 client application, the data from the outside is always accessed via the HTTP proxy server 202 of the compliant client device 20. Note that a setting for causing all HTTP requests from the non-compliant client device 30 on the LAN 70 to pass through the HTTP proxy server 202 is performed by using, for example, a Web Proxy Auto-Discovery Protocol (WPAD) or the like.

Therefore, the DASH client 231 and the DASH client 311 do not need to be conscious of the distinction between whether to acquire a group of files to be processed via broadcasting or through communication (network transparency is provided), so that it is possible to enhance the portability of the application. As a result, it is unnecessary to implement the client device specialized only for broadcasting reception, and moreover, it is possible to implement the client device irrespective of whether a broadcast system reception is used or a communication system reception is used.

Meanwhile, in the field of broadcasting, operations regarding a viewing history such as collecting and analyzing the viewing history of content may be performed as Usage Reporting in some cases. For example, also in ATSC 3.0, a protocol for collecting viewing history information is being studied (for example, see Non-Patent Document 1).

Non-patent document 1: ATSC Candidate Standard: Service Usage Reporting (A/333) Doc. S33-170r316 May 2016

Current ATSC 3.0 is to identify a client device as an end point of a viewing history by a device ID and report the viewing history for each client device. Here, as in the configuration of the transmission system illustrated in Fig. 2, a mode in which the non-compliant client device 30 (ATSC 3.0 non-compliant device) on the LAN 70 accesses content transmitted with a protocol of ATSC 3.0 via the HTTP proxy server 202 mounted on the compliant client device 20 (ATSC 3.0 compliant device) as a gateway is assumed.

In the case of such a configuration, the viewing history of the non-compliant client device 30 (ATSC 3.0 non-compliant device) is also reported; however, it has been difficult to distinguish between the compliant client device 20 (ATSC 3.0 compliant device) and the non-compliant client device 30 (ATSC 3.0 non-compliant device) and report the viewing history for each client device. Therefore, a proposal has been requested to flexibly perform an operation regarding the viewing history by making it possible to distinguish between the compliant client device 20 (ATSC 3.0 compliant device) and the non-compliant client device 30 (ATSC 3.0 non-compliant device).

Therefore, in the present technology, by including device information indicating whether the client device that has reproduced the content is a device capable of processing data conforming to the standard for the digital broadcasting in the viewing history information, it can be identified whether the viewing history information is a report of the compliant client device 20 (ATSC 3.0 compliant device) or the non-compliant client device 30 (ATSC 3.0 non-compliant device).

That is, in the present technology, for example, information unique to a device in a header of the HTTP request for the content to be reproduced from the non-compliant client device 30 (ATSC 3.0 non-compliant device) that accesses the HTTP proxy server 202 mounted on the compliant client device 20 (ATSC 3.0 compliant device) as a gateway, and an IP address of a source of the HTTP request are included in the viewing history information.

As a result, even in a mode where the non-compliant client device 30 (ATSC 3.0 non-compliant device) illustrated in Fig. 2 accesses the content (the content distributed by the sending system 10) transmitted with the protocol of ATSC 3.0, it is possible to identify the viewing history of the non-compliant client device 30 (ATSC 3.0 non-compliant device). As a result, it is possible to flexibly perform an operation regarding the viewing history.

Here, the viewing history information is reported as Usage Reporting, but in ATSC 3.0, the viewing history information has a structure of consumption data message (CDM). Note that a CDM structure is described in "Table 4.1 CDM Logical Structure" of Non-Patent Document 1 described above.

### (Example of CDM structure)

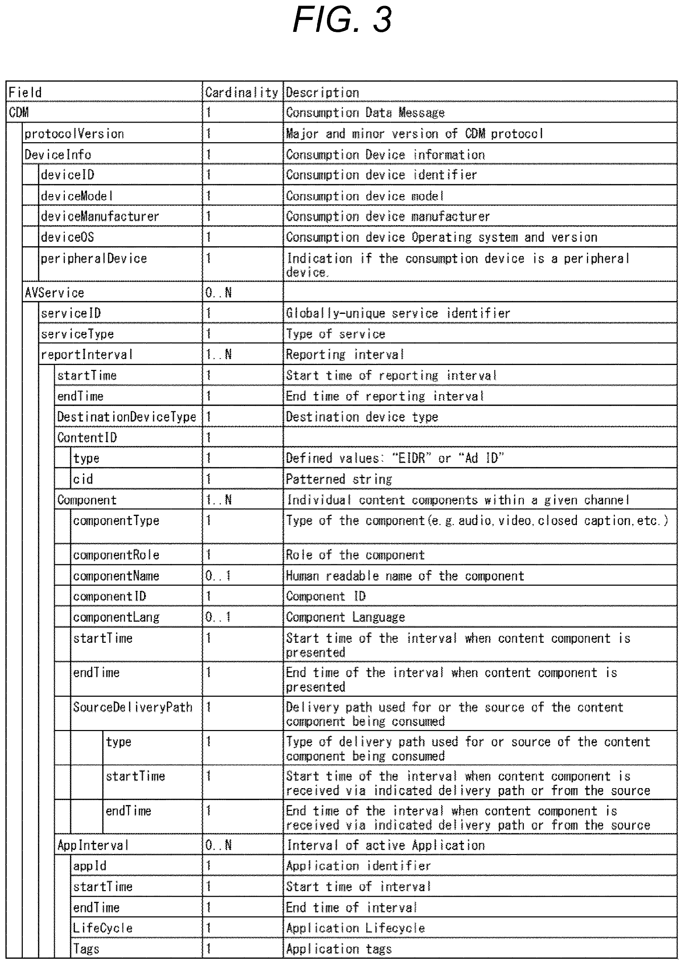

Fig. 3 is a diagram illustrating an example of a format of a current CDM. Note that the CDM is described in a JavaScript (registered trademark) object notation (JSON) format which is one type of text format.

For protocolVersion, the protocol version of CDM is specified.

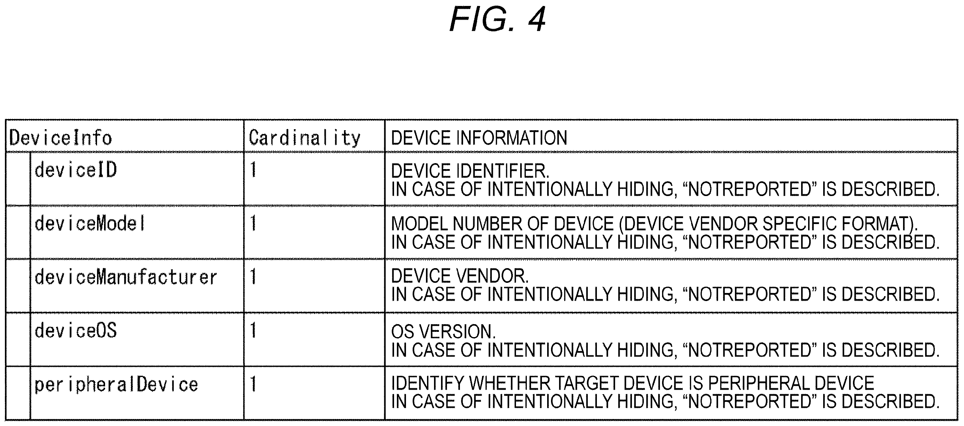

For DeviceInfo, device information is specified. Here, in the current CDM, deviceID, deviceModel, deviceManufacturer, deviceOS, and peripheralDevice are stipulated as attribute values of DeviceInfo. Here, in Fig. 4, detailed contents of the attribute values of DeviceInfo are illustrated. Only one DeviceInfo is described for each device.

For the deviceID, a device ID which is an identifier of a target device is specified. However, in a case where this device ID is intentionally hidden, "NOTREPORTED" is described.

For deviceModel, a model number of the target device is specified. However, this model number is a vendor specific format. In addition, in a case where this model number is intentionally hidden, "NOTREPORTED" is described.

For deviceManufacturer, a vendor of the target device is specified. However, in a case where this vendor is intentionally hidden, "NOTREPORTED" is described.

For the deviceOS, a version of an operating system (OS: Operating System) of the target device is specified. However, in a case where this version is intentionally hidden, "NOTREPORTED" is described.

For the peripheralDevice, information for identifying whether the target device is a peripheral device is specified. However, in a case where this identification information is intentionally hidden, "NOTREPORTED" is described.

Returning to the explanation of Fig. 3, for the AVService, information associated with the stream of the service of ATSC 3.0 reproduced by the target device is specified. As attribute values of AVService, a serviceID, serviceType, and reportInterval are stipulated.

For the serviceID, the ID of the service reproduced by the target device is specified. However, this service ID is regarded as a globally unique value. For the serviceType, a type of service identified by the service ID is specified.

As attribute values of reportInterval, a startTime, endTime, DestinationDeviceType, contentID, component, and AppInterval are stipulated. Furthermore, as attribute values of contentID, a type, and cid are stipulated. In addition, as attribute values of componentType, componentType, componentRole, componentName, componentID, componentLang, startTime, endTime, SourceDeliveryPath are stipulated, and furthermore, for the SourceDeliveryPath, a type, startTime, and endTime are stipulated as attribute values. In addition, as attribute values of AppInterval, an appId, startTime, endTime, and LifeCycle, Tags are stipulated.

With these attribute values, information associated with the viewing history can be described for each service identified by the service ID.

However, as the DestinationDeviceType, the following values are stipulated. For example, in a case where "0" is specified, this indicates that the target service has been viewed by a television receiver, and when "1" is specified, this indicates that the target service has been viewed by a device other than the television receiver (for example, a tablet computer or the like).

0 - Content is presented on a Primary Device
1 - Content is presented on a Companion Device
2 - Content is sent to a Time-shift-buffer
3 - Content is sent to a Hard-drive
4 to 255 - Reserved.

Furthermore, as a type of contentID, "EIDR" or "Ad ID" can be specified. "EIDR" is an abbreviation for Entertainment Identifier Registry, and it is possible to manage contents of television programs and movies with a global single ID. "Ad ID" is an abbreviation for Advertising ID and is an ID for advertisement.

In addition, as a type of SourceDeliveryPath, the following values are stipulated. For example, in a case where "0" is specified, this indicates that the component of the target service has been delivered via broadcasting, and in a case where "1" is specified, this indicates that the component of the target service has been delivered via communication.

0 - Broadcast delivery (content component is delivered by broadcast)
1 - Broadband delivery (content component is delivered by broadband)
2 - Time-shift-buffer source (content source is local time shift buffer)
3 - Hard-drive source (content source is local hard drive)
4 to 255 - Reserved.

Note that in Fig. 3, an item of Cardinality represents the number of occurrences. For example, in a case where "1" is specified, only one element or attribute is specified. Furthermore, for example, in a case where "0. N" is specified, it is arbitrary whether to specify one or more elements or attributes, and in a case where "1. N" is specified, one or more elements or attributes are specified.

### <2. System configuration>

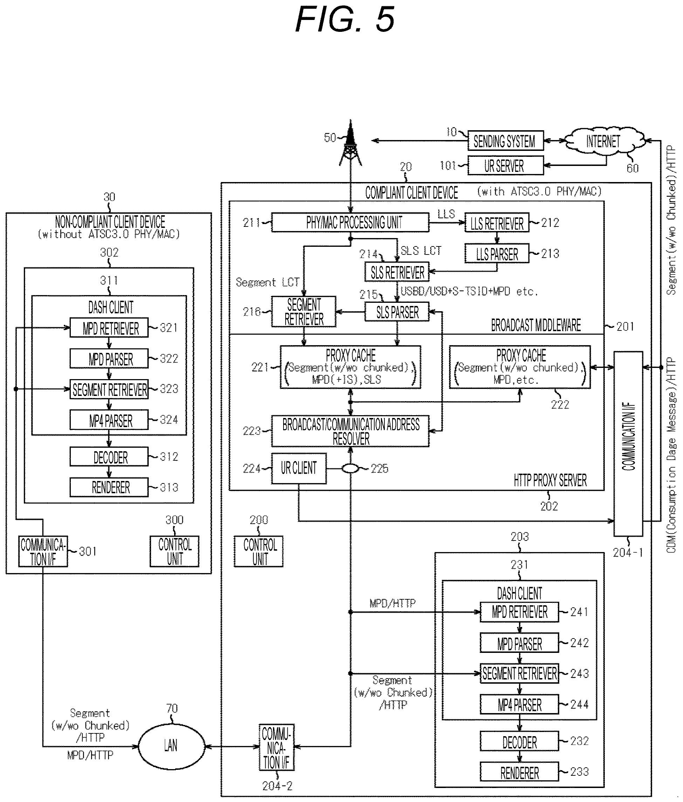

Next, with reference to Fig. 5, a configuration of a transmission system compliant with Usage Reporting will be described.

### (Configuration example of transmission system of present technology)

Fig. 5 is a diagram illustrating a configuration of one embodiment of a transmission system to which the present technology is applied.

In Fig. 5, as in Fig. 2, as an example of the IP transmission scheme, an implementation model of a transmission system compliant with ATSC 3.0 will be described. In the transmission system of Fig. 5, parts corresponding to those of the transmission system of Fig. 2 are denoted by the same reference numerals, and the description thereof will be repeated, so that the description will be omitted as appropriate.

That is, in Fig. 5, the sending system 10 is provided with a Usage Reporting (UR) server 101 for collecting viewing history information. Furthermore, in the compliant client device 20, a UR client 224 and a HTTP request handler 225 are provided in the HTTP proxy server 202 as a function (module) for reporting viewing history information.

By adding these functions to the sending system 10 on the sending side and the compliant client device 20 on the receiving side, it is possible to record and report a reproduction history (viewing history) of the content at (the DASH client 231 of) the browser 203 of the compliant client device 20, and a reproduction history (viewing history) of the content at (the DASH client 311 of) the browser 302 of the non-compliant client device 30.

In the HTTP proxy server 202 of the compliant client device 20, the UR client 224 is a module for generating the viewing history information including a CDM structure of the present technology in response to the notification from the HTTP request handler 225.

The HTTP request handler 225 is a module that first receives and parses a request (HTTP request) from the ATSC 3.0 client application (the DASH client 231 or the DASH client 311).

Thereby, in response to the notification from the HTTP request handler 225, the UR client 224 generates viewing history information in accordance with the reproduction of the content at (the DASH client 231 of) the browser 203 of the compliant client device 20, and viewing history information in accordance with the reproduction of the content by (the DASH client 311 of) the browser 302 of the non-compliant client device 30.

That is, by monitoring the traffic of the HTTP request via the HTTP request handler 225, the UR client 224 can record the reproduction history (viewing history) of the content between the DASH client 231 mounted in the compliant client device 20 and the DASH client 311 mounted outside the compliant client device 20.

Here, the viewing history information includes the CDM structure of the present technology. As described above, the CDM structure stipulated by ATSC 3.0 includes a DeviceInfo element as device information and an AVService element related to the stream of services of ATSC 3.0 reproduced by the device.

Therefore, in the present technology, by including device information (non3.0DeviceAttributes) indicating whether a client device that has reproduced the content is a device capable of processing data conforming to ATSC 3.0 as the CDM structure, it can be identified whether target viewing history information (CDM) is a report of the compliant client device 20 (ATSC 3.0 compliant device) or the non-compliant client device 30 (ATSC 3.0 non-compliant device).

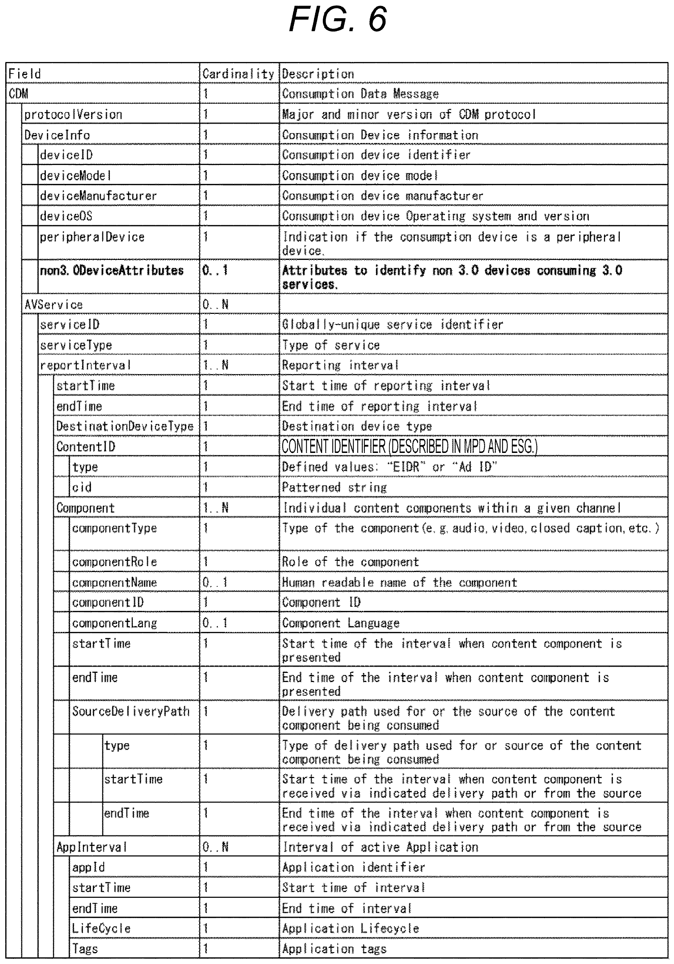

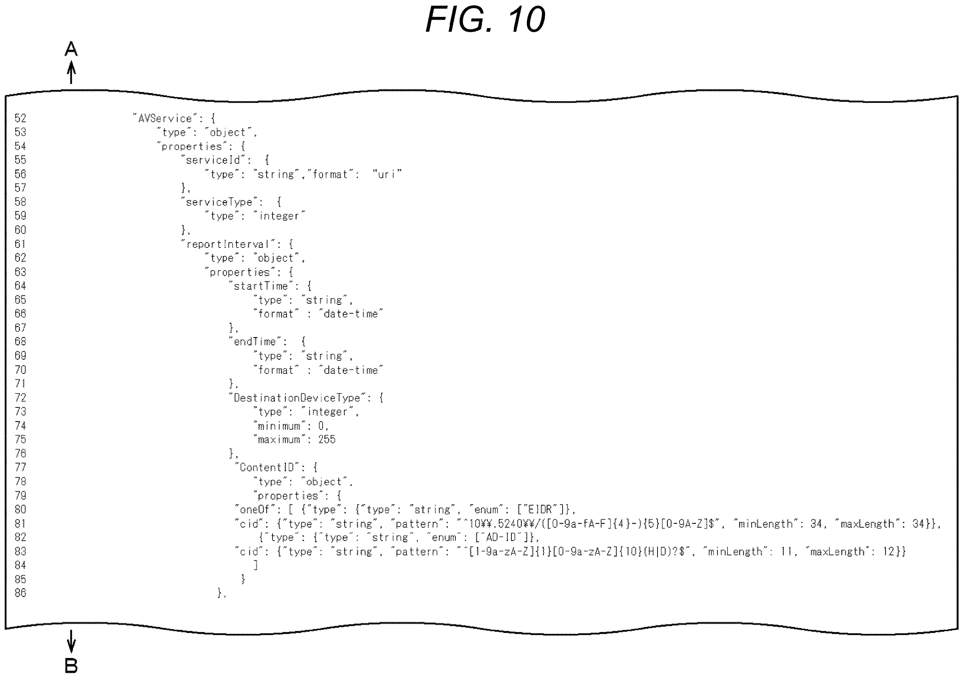

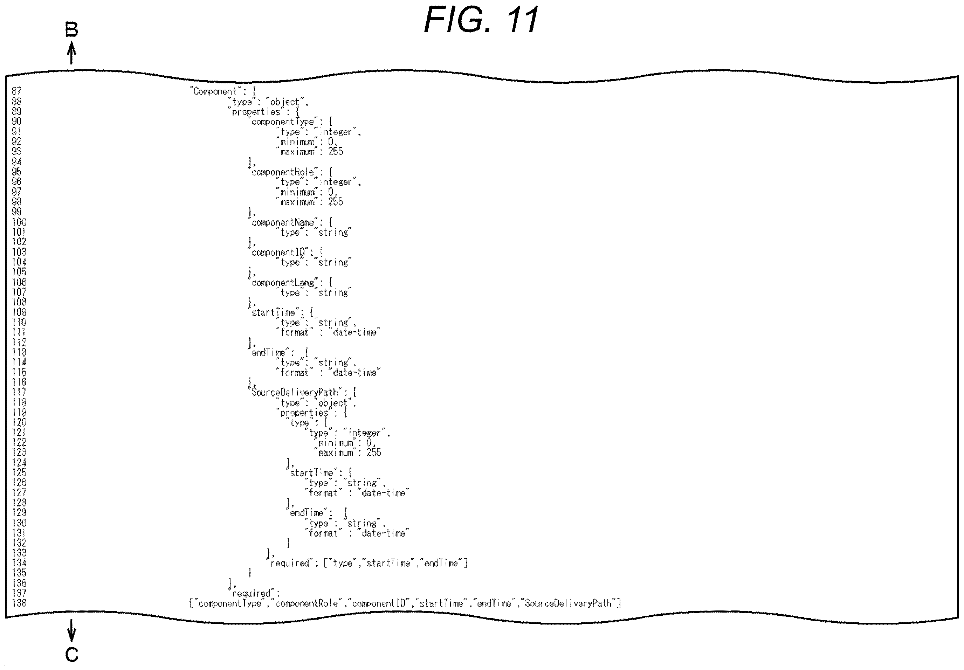

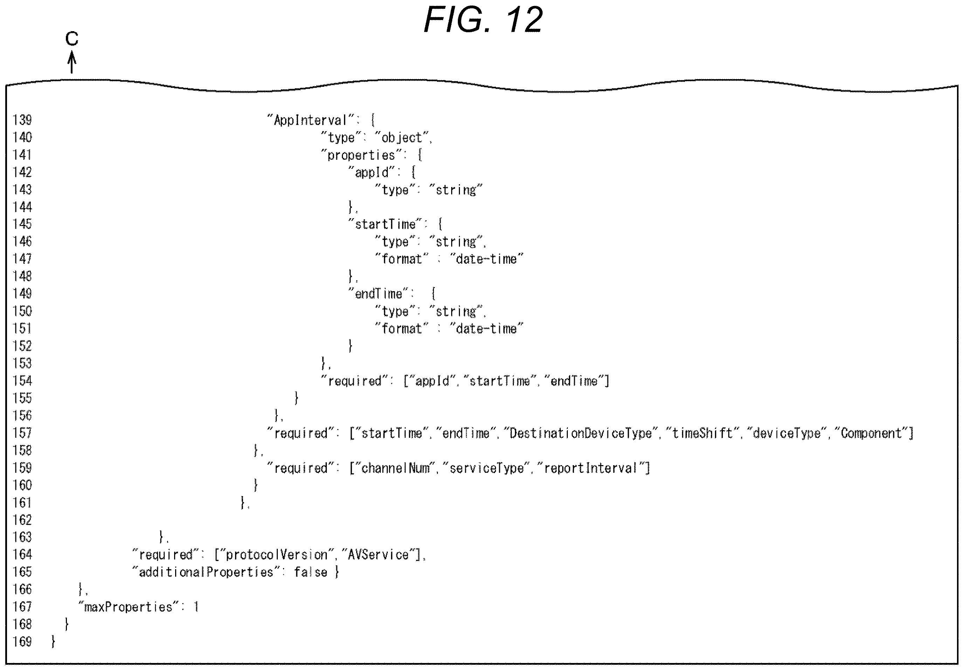

That is, the UR client 224 includes, in the viewing history information (CDM), information unique to a device in a header of the HTTP request for the content to be reproduced from the non-compliant client device 30 (ATSC 3.0 non-compliant device) that accesses the HTTP proxy server 202, and an IP address of a source of the HTTP request. Note that the details of the viewing history information including the CDM structure of the present technology will be described later with reference to Fig. 6 to FIG 12.

In addition, the UR client 224 supplies the viewing history information to the communication I/F 204-1 at a predetermined timing. The communication I/F 204-1 sends viewing history information from the UR client 224 to a UR server 101 via the Internet 60.

As a timing at which the UR client 224 sends the viewing history information, for example, the UR client 224 may periodically send the viewing history information at a predetermined interval, and the UR client 224 may send the viewing history information in response to signaling sent from the sending system 10 to the compliant client device 20, and comments included in watermark messages of video and audio, and the like.

The UR server 101 receives the viewing history information sent from (the UR client 224 of) the compliant client device 20 via the Internet 60. Note that in Fig. 5, for convenience of explanation, only one compliant client device 20 is illustrated, but actually, in the UR server 101, the viewing history information from (the UR client 224 of) the plurality of compliant client devices 20 is received, and a plurality of pieces of viewing history information is collected.

The UR server 101 performs various processing such as analysis and parsing of the viewing history with respect to the collected viewing history information. For example, the UR server 101 can generate a viewing history report regarding a viewing history for each broadcasting station and provide the report to each broadcasting station.

Here, the viewing history information including the CDM structure of the present technology includes device information (non3.0DeviceAttributes) indicating whether the client device that has reproduced the content is a device capable of processing data conforming to ATSC 3.0.

Therefore, the UR server 101 may identify whether target viewing history information is a report of the compliant client device 20 (ATSC 3.0 compliant device) and the non-compliant client device 30 (ATSC 3.0 non-compliant device) and generate a viewing history report. That is, even in a mode where the non-compliant client device 30 (ATSC 3.0 non-compliant device) accesses the content transmitted with the protocol of ATSC 3.0, it is possible to identify the viewing history of the non-compliant client device 30 (ATSC 3.0 non-compliant device).

Note that in the current CDM illustrated in Fig. 3, it is known by the DestinationDeviceType that the content of the target service has been reproduced by either the television receiver or a device other than the television receiver, but it is unknown that the content of the target service has been reproduced by either the compliant client device 20 (ATSC 3.0 compliant device) or the non-compliant client device 30 (ATSC 3.0 non-compliant device), unlike the CDM in the present technology.

The transmission system of the present technology is configured as described above.

### <3. Viewing history information (CDM) of present technology>

Next, referring to Fig. 6 to Fig. 12, the details of the viewing history information having the CDM structure of the present technology will be described.

### (Example of CDM structure of present technology)

Fig. 6 is a diagram illustrating an example of a format of a CDM of the present technology. As described above, the CDM is described in a JSON format.

The format of the CDM of Fig. 6 differs from the format of the CDM (Fig. 3) described above in that, as the attribute values of DeviceInfo, non3.0DeviceAttributes is added in addition to a deviceID, deviceModel, deviceManufacturer, deviceOS, and peripheralDevice.

The non3.0DeviceAttributes is an attribute indicating whether it is a device capable of processing data conforming to ATSC 3.0. With this non3.0DeviceAttributes, it becomes possible to identify whether a target CDM is a report of the compliant client device 20 (ATSC 3.0 compliant device) or the non-compliant client device 30 (ATSC 3.0 non-compliant device).

As attribute values of non3.0DeviceAttributes, a pair of "schemeIdUri" and "value" can be specified. For example, by defining, for "schemeIdUri", a value that is "urn:browserUserAgent" as a uniform resource identifier (URI) that identifies the content of a header of a user agent (UserAgent) of the HTTP request, a character string (information) stored in the header of the user agent can be described as a value of "value".

Here, in the header (HTTP request header) of the user agent of the HTTP request for the DASH segment file and the application file of the broadcasting service issued by the non-compliant client device 30, as the user agent, information associated with an operating system (OS) and information indicating whether the non-compliant client device 30 is a mobile terminal is included. Note that this HTTP request uses a GET method among methods defined in HTTP.

For example, when "Mozilla / 5.0 (compatible; MSIE 10.0; Windows NT 6.1; WOW 64; Trident/6.0)" is obtained as the user agent, it is found that the non-compliant client device 30 is a personal computer with Windows (registered trademark) as an operating system (OS).

Furthermore, for example, when "Mozilla/5.0 (Linux; U; Android 2.2.1; en-us; Nexus One Build/FRG83) AppleWebKit/533.1 (KHTML, like Gecko) Version/4.0 Mobile Safari/533.1" is obtained as the user agent, it is found that the non-compliant client device 30 is a smart phone with Android (registered trademark) as an operating system (OS). Note that if "Mobile" is not described in the user agent, it is found that the non-compliant client device 30 is a tablet computer.

Furthermore, in the non3.0DeviceAttributes, by defining, for "schemeIdUri", a value that is "urn:ipAddress" as a URI that identifies the content of the IP address in addition to a URI ("urn:browserUserAgent") that identifies the content of the header of the user agent of the HTTP request, a local IP address can be described as a value of "value".

For example, when "192.168.0.12" is obtained as a value of "value", it is found that a local IP address assigned to the non-compliant client device 30 is "192.168.0.12".

### (Description example of CDM of present technology)

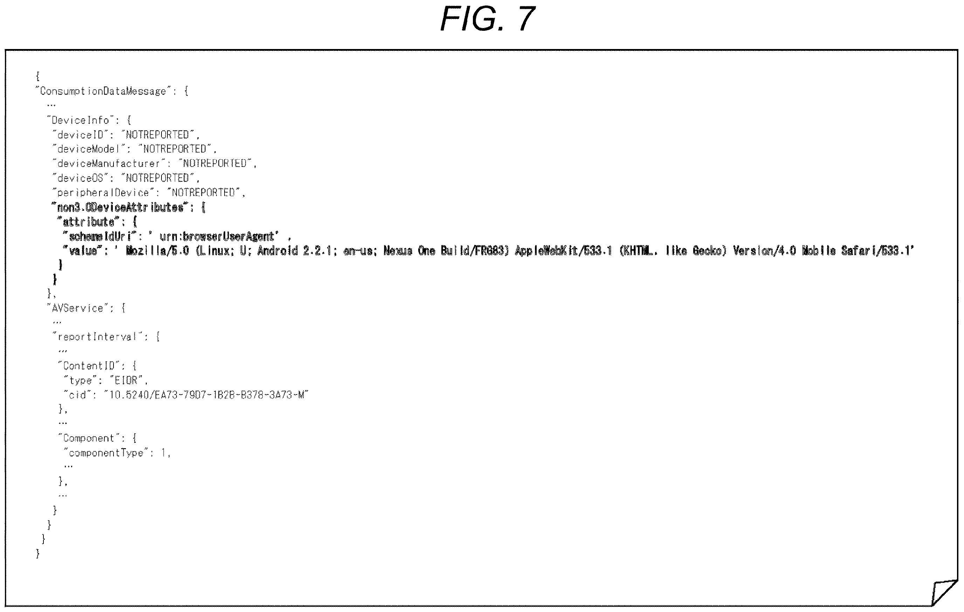

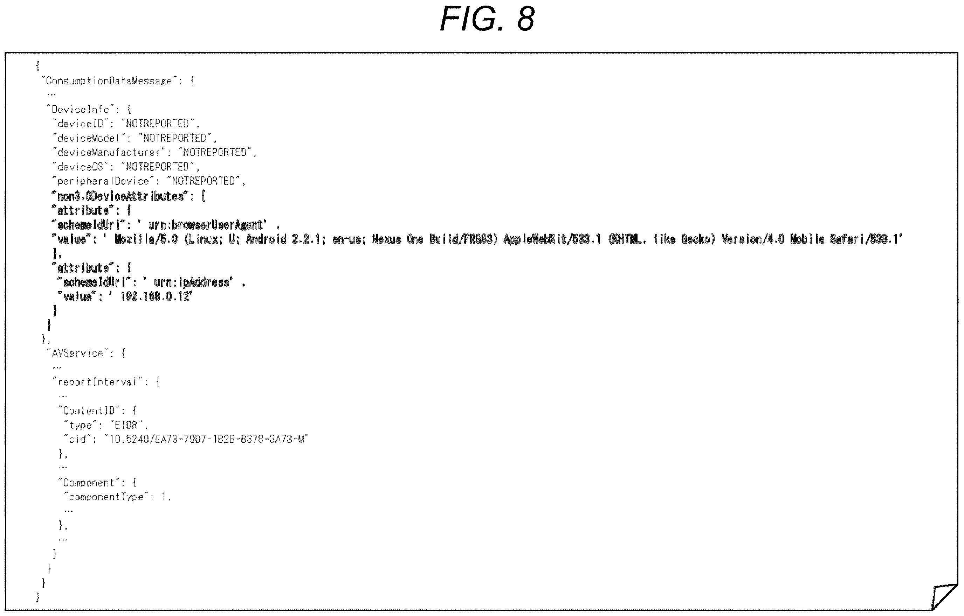

Next, with reference to Fig. 7 and Fig. 8, a description example of the CDM of the present technology will be described. Note that JSON format objects are expressed so that key and value pairs are paired with a colon (:) and zero or more of these pairs are separated by a comma (,) and enclosed in curly braces ({}) entirely.

### (A) Description example 1 of CDM

Fig. 7 is a diagram illustrating a description example of the CDM in a case where information associated with a user agent is included as information unique to the ATSC 3.0 non-compliant device. Note that in Fig. 7, in order to simplify the description, a part of the attribute values of DeviceInfo and the attribute values of AVService is excerpted and described.

In the CDM of Fig. 7, deviceID, deviceModel, deviceManufacturer, device OS, peripheralDevice, and non3.0DeviceAttributes are included as the attribute values of DeviceInfo.

For a key which is the deviceID, a value "NOTREPORTED" is specified as a pair. That is, it is indicated that the device ID is intentionally hidden.

Furthermore, it is indicated that, for the deviceModel, deviceManufacturer, deviceOS, and peripheralDevice, the value "NOTREPORTED" is specified, and a model number of the target device, a manufacturer (vendor) of the target device, an operating system (OS) version of the target device, and information for identifying whether the target device is a peripheral device are intentionally hidden.

As the attribute values of non3.0DeviceAttributes, a pair of "schemeIdUri" and "value" is specified. In this case, for "schemeIdUri", a value that is "urn:browserUserAgent" is defined as a URI that identifies the content of the header of the user agent of the HTTP request, and a character string (information) stored in the header of the user agent is described as a value of "value".

In the example of Fig. 7, it is indicated that, as the value of "value", "Mozilla/5.0 (Linux; U; Android 2.2.1; en-us; Nexus One Build/FRG83) AppleWebKit/533.1 (KHTML, like Gecko) Version/4.0 Mobile Safari/533.1" is described, which means a fact that the non-compliant client device 30 is a smart phone with Android (registered trademark) as an operating system (OS).

In the reportInterval of AVService, a pair of "type" and "cid" is specified as attribute values of ContentID. Here, it is indicated that a value that is "EIDR" is defined for "type" and "10.5240/EA73-79D7-1B2B-B378-3A73-M" is set as a value of "cid" which is a content identifier (CID: Content ID) in EIDR format.

As an attribute value of Component, "componentType" is specified. In this case, it is indicated that a value of "1" is set for "componentType", and a target component is video.

As described above, in the description example of the CDM of Fig. 7, it is indicated that content reproduced by the non-compliant client device 30 (ATSC 3.0 non-compliant device) as a smartphone with Android (registered trademark) as an operating system (OS), the content being identified by attribute values of non3.0DeviceAttributes, is content of video having a content identifier (CID) in EIDR format which is "10.5240/EA73-79D7-1B2B-B378-3A73-M".

### (B) Description example 2 of CDM

Fig. 8 is a diagram illustrating a description example of the CDM in a case where information associated with a user agent and an IP address are included as information unique to the ATSC 3.0 non-compliant device. Note that also in Fig. 8, in order to simplify the description, a part of the attribute values of DeviceInfo and the attribute values of AVService is excerpted and described; however, description of the parts corresponding to the description example of Fig. 7 will be omitted.

In the CDM of Fig. 8, a pair of "schemeIdUri" and "value" is specified as the attribute values of non3.0DeviceAttributes. However, it is indicated herein that, for "schemeIdUri", a value that is "urn:ipAddress" is defined as a URI that identifies the content of the IP address in addition to a URI ("urn:browserUserAgent") that identifies the content of the header of the user agent of the HTTP request, and an IP address is described as a value of "value".

In the example of Fig. 8, it is indicated that "192.168.0.12" is described as a value of "value", and the local IP address assigned to the non-compliant client device 30 is "192.168.0.12".

As described above, in the description example of the CDM of Fig. 8, it is indicated that content reproduced by the non-compliant client device 30 (ATSC 3.0 non-compliant device) that is a smartphone with Android (registered trademark) as an operating system (OS) and to which a local IP address of "192.168.0.12" is assigned, the content being identified by attribute values of non3.0DeviceAttributes, is content of video having a content identifier (CID) in EIDR format which is "10.5240/EA73-79D7-1B2B-B378-3A73-M".

Note that in Fig. 7 and Fig. 8, description examples of the CDM of JSON format are illustrated; however, the description format of the CDM of the present technology is not limited to the JSON format, but for example, other text format data such as XML (Extensible Markup Language) format can also be adopted.

Furthermore, in Fig. 7 and Fig. 8, since the attribute values (deviceID and the like) of DeviceInfo are indispensable values, "NOTREPORTED" is described in a case where the attribute values are intentionally hidden. However, by setting each of the attribute values of DeviceInfo to an arbitrary value, it is possible to omit the description of the attribute value itself of DeviceInfo when the attribute values are intentionally hidden.

### (Example of JSON schema)

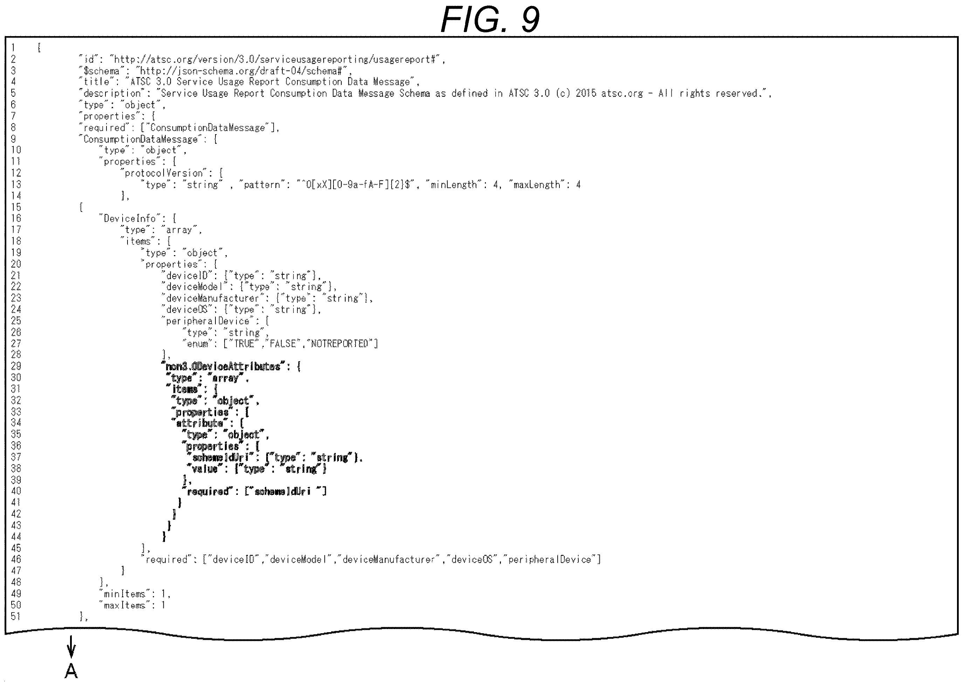

Fig. 9 to Fig. 12 are diagrams each illustrating an example of a JSON schema of the CDM of the present technology.

The JSON schema illustrated in Fig. 9 to Fig. 12 corresponds to a CDM format of the present technology illustrated in Fig. 6. That is, this JSON schema corresponds to the CDM of the present technology which extends the current CDM stipulated in ATSC 3.0, and the structure other than the extended part is similar to the structure of JSON schema of the current CDM. Since the structure of the JSON schema of the current CDM is disclosed in "Annex A: Schema" of Non-Patent Document 1 described above, the description thereof will be omitted here.

In the JSON schema of the CDM illustrated in Fig. 9 to Fig. 12, non3.0DeviceAttributes is defined as the attribute values of DeviceInfo in the paragraphs 29 to 44 in Fig. 9. Here, as attribute values of non3.0DeviceAttributes which are an array type, a pair of a character type "schemeIdUri" and a character type "value" is defined. However, in these pairs, "schemeIdUri" is an indispensable element.

By defining the JSON schema of such a CDM, for example, by defining the value "urn:browserUserAgent" for "schemeIdUri", the information of the user agent of the HTTP request can be described as a value of "value". Furthermore, for example, by defining the value "urn:ipAddress" for "schemeIdUri", a local IP address can be described as a value of "value".

### <4. Protocol between Usage Reporting devices>

### (Example of Usage Reporting Protocol)

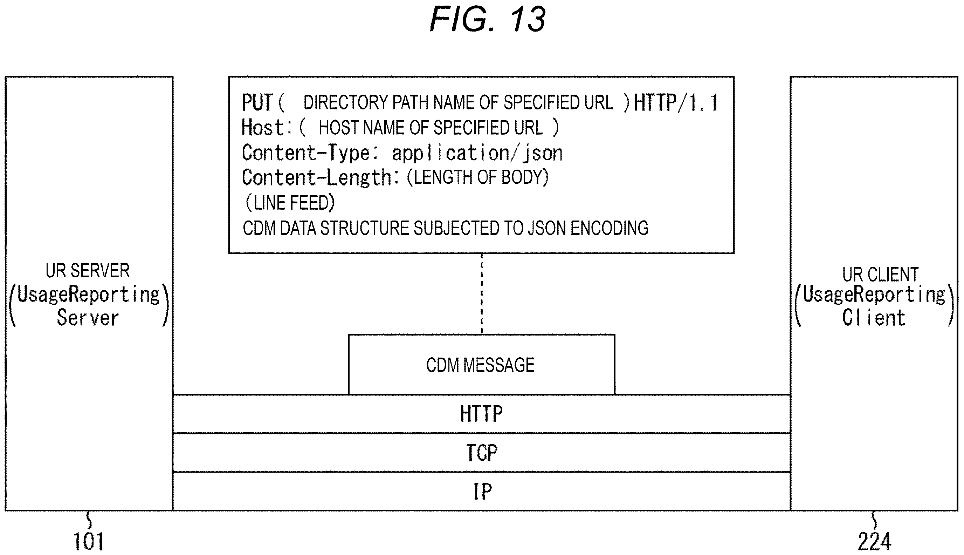

Fig. 13 is a diagram illustrating an example of a protocol between the UR server 101 and the UR client 224 of the compliant client device 20, illustrated in Fig. 5.

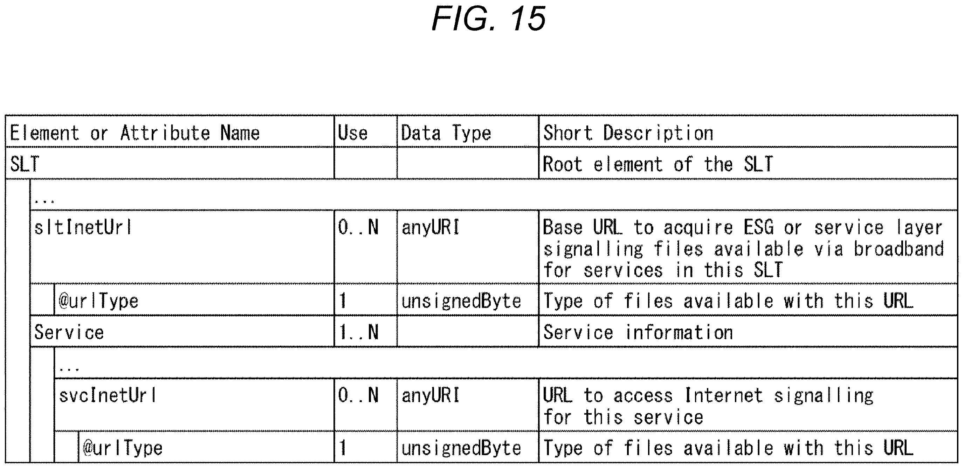

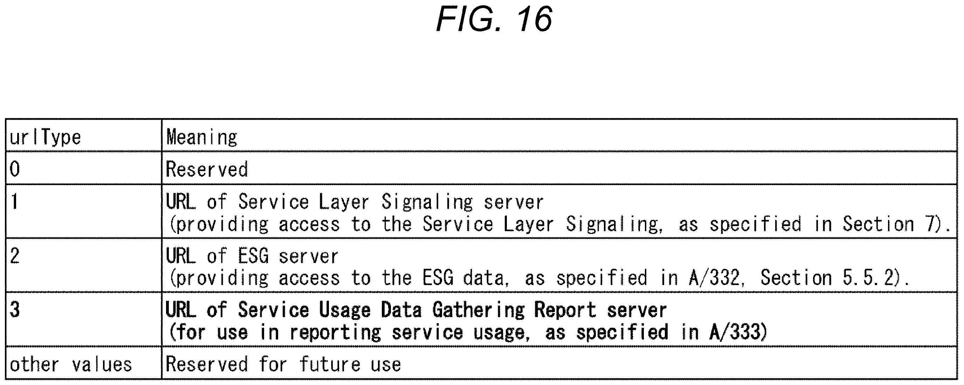

In the compliant client device 20, the LLS from the sending system 10 is processed by the broadcast middleware 201, so that SLT metadata is obtained. However, the SLT metadata includes a URL of the UR server 101. Then, according to the URL of the UR server 101 included in the SLT metadata, the communication I/F 204-1 can access the UR server 101 via the Internet 60. Note that the details of the URL of the UR server 101 which is known by the SLT metadata will be described later with reference to Fig. 15 and Fig. 16.

Here, the viewing history information (CDM) generated by the UR client 224 of the HTTP proxy server 202 is sent to the UR server 101 via the Internet 60. This viewing history information (CDM) can be stored in a body part using a PUT method of the HTTP request.

That is, the viewing history information (CDM) can be sent from the compliant client device 20 (UR client 224) to the UR server 101 in the form of a CDM message illustrated in Fig. 13. However, in this CDM message, "PUT" indicating a method, a URI indicating the directory and path name of the specified URL, and "HTTP / 1.1" indicating a HTTP version are described in a request row on a first line.

Furthermore, in the CDM message, in the header part of the second to fourth lines, "Host" indicating a host name of a specified URL, "Content-Type" in which a data format is specified, and "Content-Length" in which a length of the body part is specified are described. Then, the viewing history information including the CDM structure encoded in the JSON format can be stored in the body part of a sixth line across a line feed.

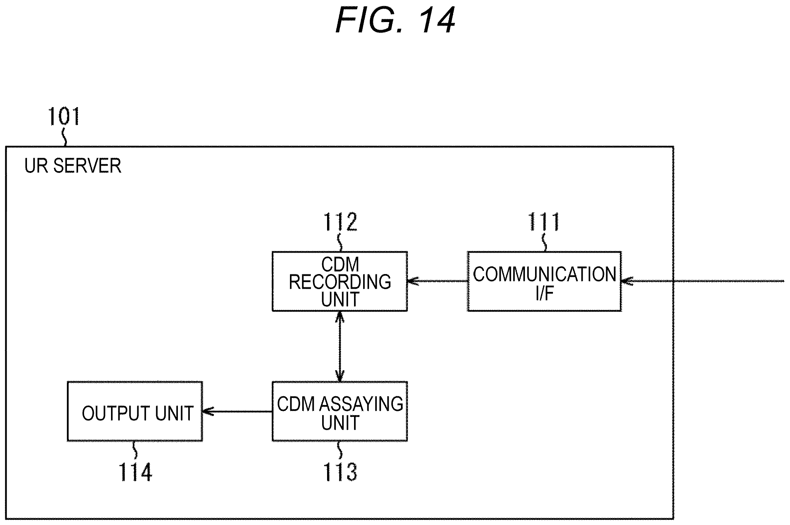

In accordance with such a protocol, the viewing history information (CDM) sent from the compliant client device 20 (UR client 224) is received by the UR server 101 via the Internet 60 and then processed. Note that the detailed configuration of the UR server 101 will be described later with reference to Fig. 14.

### (Configuration example of UR server)

Fig. 14 is a diagram illustrating a configuration example of the UR server 101 in Fig. 5.

The UR server 101 includes a communication I/F 111, a CDM recording unit 112, a CDM analysis unit 113, and an output unit 114.

The communication I/F 111 includes, for example, a communication interface circuit and the like, and exchanges data with the compliant client device 20 via the Internet 60. The communication I/F 111 receives the viewing history information sent from the plurality of compliant client devices 20 via the Internet 60, and supplies the viewing history information to the CDM recording unit 112.

The CDM recording unit 112 includes, for example, a hard disk (HDD: Hard Disk Drive), a semiconductor memory, or the like. The CDM recording unit 112 records viewing history information from the communication I/F 111. As a result, viewing history information from the plurality of compliant client device 20 is collected. The viewing history information includes the CDM structure of the present technology illustrated in Fig. 6.

The CDM analysis unit 113 includes, for example, a CPU, a microprocessor, or the like. The CDM analysis unit 113 reads the viewing history information recorded in the CDM recording unit 112 and analyzes the read viewing history information. In accordance with the analysis result of the viewing history information, the CDM analysis unit 113 generates a viewing history report regarding the viewing history and supplies the viewing history report to the output unit 114.

The output unit 114 includes, for example, an output interface circuit and a display such as an LCD. The output unit 114 outputs the viewing history report from the CDM analysis unit 113 to an external device. Furthermore, in a case where the output unit 114 includes a display, the viewing history report may be displayed on the display.

The UR server 101 is configured as described above.

### (Structural example of SLT Metadata)

Fig. 15 is a diagram illustrating an example of the format of the SLT metadata in an XML format. Note that in Fig. 15, among elements and attributes, "@" is attached to each of the attributes. Furthermore, indented elements and attributes are those specified for the higher level elements.

However, regarding the format of the SLT metadata, detailed contents thereof are described in "Table 6.2 SLT XML Format" of Non-Patent Document 2 described below. Therefore, in the example of the format of Fig. 15, the SLT metadata, particularly the parts related to the present technology, is excerpted and described.

Non-patent document 2: ATSC Candidate Standard: Signaling, Delivery, Synchronization, and Error Protection(A/331) Doc. S33-174r15 January 2016

The SLT element is a root element and contains an sltInetUrl element. For the sltInetUrl element, for each frequency band (for example, 6 MHz) identified by a broadcast stream ID, a URL in accordance with a URL type specified by an attribute value of a urlType attribute can be specified.

Here, Fig. 16 illustrates an example of attribute values of the urlType attribute.

In a case where "1" is specified as the urlType attribute, this case indicates that a URL of the signaling server providing the SLS is specified in the sltInetUrl element. In addition, in a case where "2" is specified as the urlType attribute, this case indicates that the URL of an ESG server providing an electronic program guide (ESG: Electronic Service) is specified in the sltInetUrl element.

In addition, in a case where "3" is specified as the urlType attribute, this case indicates that the URL of the UR server 101 is specified in the sltInetUrl element. In other words, in a case of adopting the configuration of the transmission system illustrated in Fig. 5, an operation regarding the viewing history of content is performed as Usage Reporting; therefore, in the sltInetUrl element of the SLT metadata, the URL of the UR server 101 is described, and "3" is specified as the urlType attribute.

Returning to the description of Fig. 15, the SLT element includes one or more Service elements. In the Service element, information associated with each service is specified on a service basis. This Service element contains an svcInetUrl element. In the svcInetUrl element, for each service identified by the service ID, a URL in accordance with a URL type specified by the attribute value of the urlType attribute can be specified.

Here, as for the attribute value of the urlType attribute of the svcInetUrl element, the attribute value illustrated in Fig. 16 is specified. In addition, in a case where "3" is specified as the urlType attribute, the URL of the UR server 101 is specified in the svcInetUrl element.

In this way, in a case of specifying the URL of the UR server 101 for each frequency band identified by the broadcast stream ID, the URL of the UR server 101 may be described in the sltInetUrl element under the SLT element. In addition, in a case of specifying the URL of the UR server 101 for each service identified by the service ID, the URL of the UR server 101 may be described in the svcInetUrl element under the Service element.

Note that in Fig. 15, the item "use" indicates the number of occurrences. For example, in a case where "0..N" is specified, it is arbitrary whether one or more elements or attributes are specified. In addition, for example, in a case where "1" is specified, only one element or attribute is specified, and when "1..N" is specified, one or more elements or attributes are specified.

Furthermore, in Fig. 15, the item of Data Type indicates a data format. For example, in a case where "anyURI" is specified, it is indicated that the data is a character string in the form of URI. Furthermore, for example, in a case where "unsignedByte" is specified, it is indicated that an integer from 0 to 255 is used.

### <5. Flow of viewing history information correspondence processing>

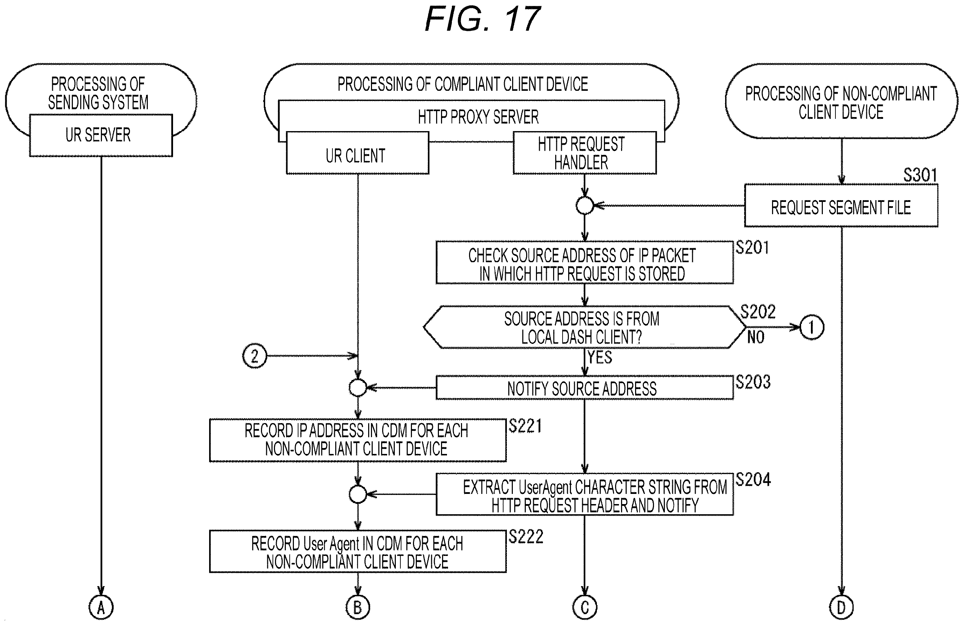

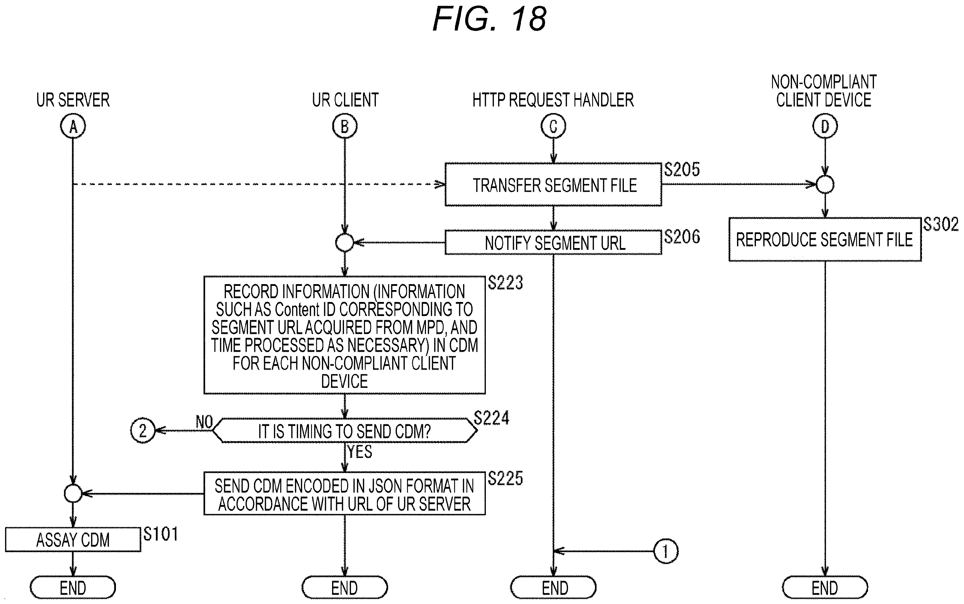

Next, with reference to the flowcharts of Fig. 17 and Fig. 18, a flow of viewing history information correspondence processing executed by the transmission system of Fig. 5 will be described.

Note that in Fig. 17 and Fig. 18, processing in step S101 is executed by the sending system 10. Furthermore, processing steps S201 to S206 and S221 to S225 is executed by the compliant client device 20. Furthermore, processing in steps S301 to S302 is executed by the non-compliant client device 30.

In step S301 of Fig. 17, the control unit 300 of the non-compliant client device 30 controls the communication I/F 301 and requests the compliant client device 20 to transmit the DASH segment file of the content via the LAN 70. Here, for example, in a case where reproduction of content such as a television program distributed from the sending system 10 is instructed by a user operation, an IP packet in which a HTTP request from the non-compliant client device 30 is stored is notified to the compliant client device 20.

In the compliant client device 20, the IP packet in which the HTTP request from the non-compliant client device 30 is stored is received by the communication I/F 204-2 and supplied to the HTTP request handler 225 of the HTTP proxy server 202.

In step S201, the HTTP request handler 225 checks a source address of the IP packet in which the HTTP request is stored.

In step S202, the HTTP request handler 225 determines whether the source address is from a local DASH client according to the check result of the source address in step S201. Here, since the IP address assigned to the non-compliant client device 30 on which the DASH client 311 is mounted is the source address, it is determined that the source address is from the local DASH client ("YES" in S202), and processing proceeds to step S203.

Note that in a case where it is determined in step S202 that the source address is not from the local DASH client, after the necessary processing is performed, the processing is ended.

In step S203, the HTTP request handler 225 notifies the UR client 224 of the source address which is the determination target in the processing in step S202. As a result, in the HTTP proxy server 202, the source address from the HTTP request handler 225 is received by the UR client 224.

In step S221, the UR client 224 records the IP address in accordance with the source address from the HTTP request handler 225, in the CDM (DeviceInfo.non3.0DeviceAttributes) managed for each non-compliant client device 30.

Furthermore, in step S204, the HTTP request handler 225 extracts a character string of a user agent (UserAgent) from the HTTP request header stored in the IP packet of the source address determined in the processing in step S202, and notifies the UR client 224 of the character string of the user agent. As a result, in the HTTP proxy server 202, information of the user agent from the HTTP request handler 225 is received by the UR client 224.

In step S222, the UR client 224 records the information of the user agent from the HTTP request handler 225, in the CDM (DeviceInfo.non3.0DeviceAttributes) managed for each non-compliant client device 30. The information on the user agent includes, for example, information associated with an operating system (OS) and information indicating whether the non-compliant client device 30 is a mobile terminal.

Note that in a case where the source address (IP address) and the information of the user agent have the same contents, it is not always necessary to repeatedly acquire the information, and the already acquired source address and the information can be reused.

In step S205 of Fig. 18, the HTTP request handler 225 transfers the DASH segment file that is data of content such as a television program distributed from the sending system 10 and obtained by the processing of the broadcast middleware 201, to the non-compliant client device 30 via the LAN 70.

In step S302, the DASH client 311 of the non-compliant client device 30 reproduces the DASH segment file transferred from (the HTTP request handler 225 of the HTTP proxy server 202 of) the compliant client device 20. As a result, in the non-compliant client device 30, content such as a television program distributed from the sending system 10 is reproduced and viewed by the user.

In step S206, the HTTP request handler 225 notifies the UR client 224 of the segment URL corresponding to the DASH segment file transferred to the non-compliant client device 30 in processing in step S205. As a result, in the HTTP proxy server 202, the segment URL from the HTTP request handler 225 is received by the UR client 224.

In step S223, the UR client 224 records information corresponding to the segment URL from the HTTP request handler 225, in the CDM (AVService) managed for each non-compliant client device 30.

Here, for example, since a content ID (ContentID) corresponding to the segment URL can be obtained by referring to the MPD metadata, the content ID can be recorded in the AVService.reportInterval.contentID of the CDM. In addition, here, information other than the content ID can also be recorded as long as the information is included in the CDM structure illustrated in Fig. 6. For example, time processed as necessary can be recorded in AVService.reportInterval.startTime (endTime) of the CDM.

In step S224, the control unit 200 determines whether or not it is the timing to send the CDM. A determination condition includes, for example, in addition to a condition for periodically sending the viewing history information at a predetermined interval, a condition in response to signaling sent from the sending system 10 to the compliant client device 20, and comments included in watermark messages of video, and audio, and the like.

In step S224, in a case where it is determined that it is not the timing to send the CDM, the processing returns to step S221, and the subsequent processing is repeated. That is, in this case, the DASH segment file is transferred in response to a request from the non-compliant client device 30, and its reproduction history (viewing history) is kept recorded.

On the other hand, in step S224, in a case where it is determined that it is the timing to send the CDM, the processing proceeds to step S225. In step S225, the UR client 224 sends the CDM encoded in the JSON format obtained in the processing in steps S221 to S223 to the UR server 101 via the Internet 60 as viewing history information.

Note that, in this case, the communication I/F 204-1 accesses the UR server 101 via the Internet 60 according to the URL of the UR server 101 obtained from the SLT metadata, so that viewing history information (CDM) from the UR client 224 is sent to the UR server 101.

Accordingly, in the UR server 101, viewing history information (CDM) from the compliant client device 20 is received by the communication I/F 111. Note that in the UR server 101, the viewing history information is received from the plurality of compliant client devices 20, and a plurality pieces of viewing history information is collected.

In step S101, the CDM analysis unit 113 of the UR server 101 analyzes the collected viewing history information (CDM) and generates a viewing history report regarding the viewing history.

Here, the viewing history information (CDM) includes device information (non3.0DeviceAttributes) indicating whether the client device that has reproduced the content is a device capable of processing data conforming to ATSC 3.0. Therefore, the CDM analysis unit 113 may identify whether target viewing history information (CDM) is a report of the compliant client device 20 (ATSC 3.0 compliant device) and the non-compliant client device 30 (ATSC 3.0 non-compliant device) and generate a viewing history report.

The flow of the viewing history information correspondence processing has been described above.

### <6. Modified Example>

### (Description example of CDM of ATSC 3.0 compliant device)

In the above description, in a mode in which the non-compliant client device 30 accesses the content transmitted with the ATSC 3.0 protocol via the compliant client device 20, in order to identify the viewing history of the non-compliant client device 30 (ATSC 3.0 non-compliant device), non3.0DeviceAttributes is added to the attribute value of DeviceInfo of the CDM, and information unique to the non-compliant client device 30 is specified.

In this case, in order to identify the viewing history of the compliant client device 20 (ATSC 3.0 compliant device), information unique to the compliant client device 20 may be specified for non3.0DeviceAttributes of DeviceInfo of the CDM. In this case, information included in the user agent of the HTTP request can be included as information unique to the compliant client device 20.

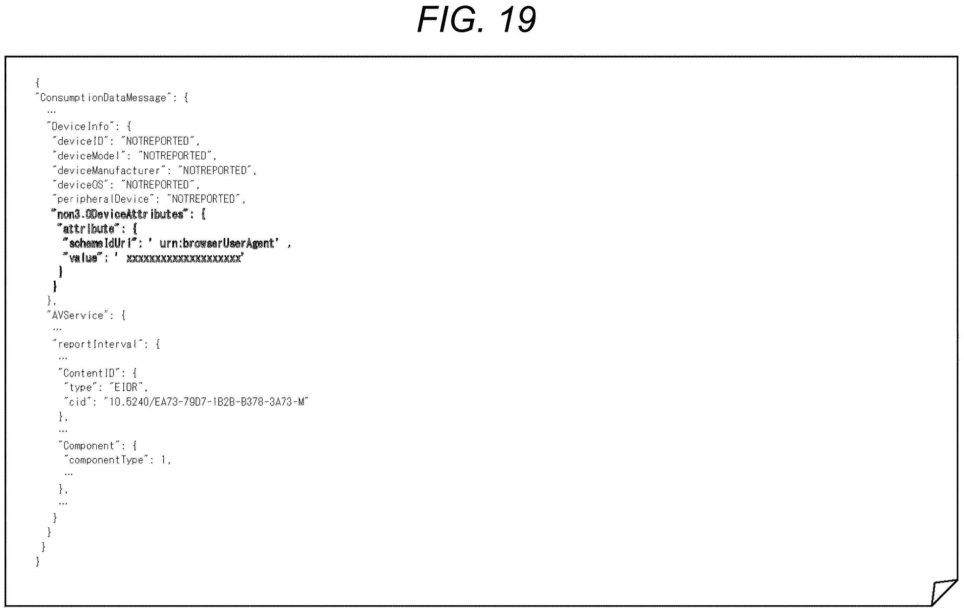

Fig. 19 illustrates a description example of the CDM in a case where information associated with a user agent is included as information unique to the ATSC 3.0 compliant device. In Fig. 19, a pair of "schemeIdUri" and "value" is specified as the attribute value of non3.0DeviceAttributes.

In this case, for "schemeIdUri", a value that is "urn:browserUserAgent" is defined as a URI that identifies the content of the header of the user agent of the HTTP request, and a character string (information) stored in the header of the user agent is described as a value of "value". As the value of "value", for example, information associated with an operating system (OS), information indicating whether the compliant client device 20is a mobile terminal, and the like are described.

Furthermore, in the compliant client device 20 (ATSC 3.0 compliant device), the HTTP request from the DASH client 231 of the browser 203 to the HTTP proxy server 202 does not include the IP address assigned to the compliant client device 20. Therefore, by not including the IP address in the viewing history information (CDM) of the compliant client device 20 (ATSC 3.0 compliant device), the viewing history information (CDM) of the compliant client device 20 (ATSC 3.0 compliant device) can be distinguished from the viewing history information (CDM) (for example, the example description of the CDM in Fig. 8) of the non-compliant client device 30 (ATSC 3.0 non-compliant device) capable of including the IP address.

### (Application to another broadcasting standard)

In the above explanation, ATSC (in particular, ATSC 3.0) which is adopted in the United States or the like as a standard of digital broadcasting has been described; however, the present technology may be applied to an integrated services digital broadcasting (ISDB) which is adopted by Japan, and the like and a digital video broadcasting (DVB) which is adopted by each country of Europe, and the like. Furthermore, in the above description, the ATSC 3.0 adopting the IP transmission method is described as an example; however, the present technology is not limited to the IP transmission scheme, and for example, the present technology may be applied to other methods such as an MPEG2-TS (Transport Stream) method and the like.

Furthermore, as a standard of digital broadcasting, in addition to terrestrial broadcasting, the present technology can be applied to standards such as satellite broadcasting using a broadcasting satellite (BS: Broadcasting Satellite), communication satellite (CS: Communications Satellite), and the like, cable broadcasting such as cable television (CATV) and the like.

### (Other Modified example)

Furthermore, the names of the above-described signaling, packets, and the like are merely examples, and other names may be used in some cases. However, a difference between these names is a formal difference, and the substantial contents of target signaling, packets, etc. are not different. For example, in the CDM, "non3.0DeviceAttributes" is defined as an attribute indicating whether it is a device capable of processing data conforming to ATSC 3.0, but another name may be used. Furthermore, for example, a user service bundle description (USBD) may be referred to as a user service description (USD). Furthermore, for example, a locally cached content (LCC) may be referred to as a non real time (NRT) or the like in some cases.

### <7. Computer configuration>

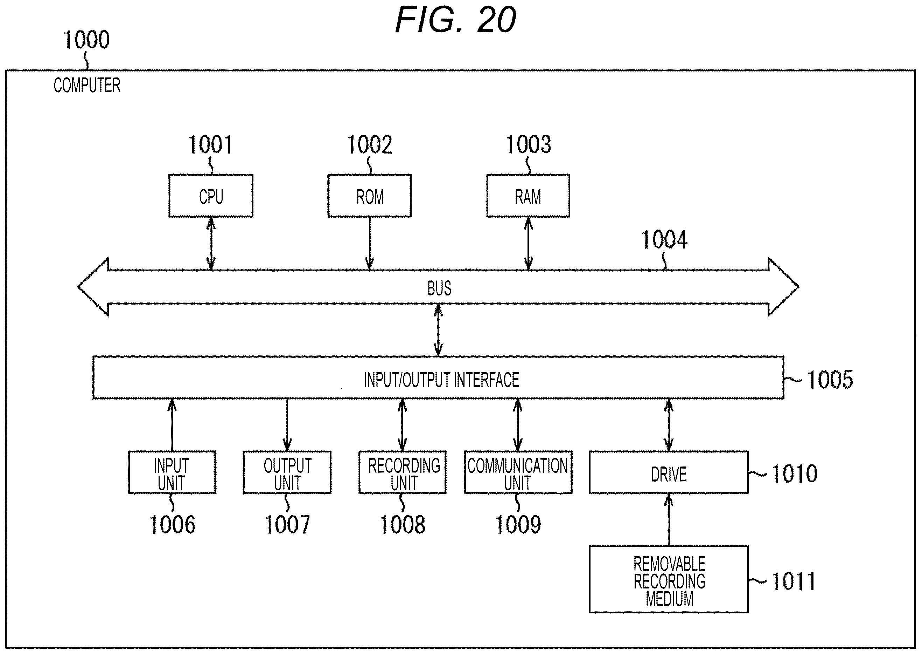

The above-described series of processing (viewing history information correspondence processing in Fig. 17 and Fig. 18) can be executed by hardware or software. In a case where a series of processing is executed by software, a program constituting the software is installed in the computer. Fig. 20 is a diagram illustrating a configuration example of hardware of a computer that executes the above-described series of processing by a program.

In a computer 1000, a central processing unit (CPU) 1001, a read only memory (ROM) 1002, and a random access memory (RAM) 1003 are mutually connected via a bus 1004. An input/output interface 1005 is further connected to the bus 1004. To the input/output interface 1005, an input unit 1006, an output unit 1007, a recording unit 1008, a communication unit 1009, and a drive 1010 are connected.

The input unit 1006 includes a keyboard, a mouse, a microphone, and the like. The output unit 1007 includes a display, a speaker, and the like. The recording unit 1008 includes a hard disk, a nonvolatile memory, and the like. The communication unit 1009 includes a network interface, and the like. The drive 1010 drives a removable recording medium 1011 such as a magnetic disk, an optical disk, a magneto-optical disk, or a semiconductor memory.

In the computer 1000 configured as described above, the CPU 1001 loads a program recorded in the ROM 1002 or the recording unit 1008 into the RAM 1003 via the input/output interface 1005 and the bus 1004 and executes the program, whereby the above-described series of processing is performed.

A program to be executed by the computer 1000 (the CPU 1001) can be provided by being recorded in the removable recording medium 1011 as a package medium, for example. Furthermore, the program can be provided via a wired or wireless transmission medium such as a local area network, the Internet, digital satellite broadcasting or the like.

In the computer 1000, the program can be installed in the recording unit 1008 via the input/output interface 1005 by attaching the removable recording medium 1011 to the drive 1010. Furthermore, the program can be received by the communication unit 1009 via a wired or wireless transmission medium and installed in the recording unit 1008. In addition, the program can be installed in the ROM 1002 or the recording unit 1008 in advance.

Here, in this description, processing performed by the computer in accordance with the program does not necessarily have to be performed in chronological order in accordance with the order described as a flowchart. That is, the processing performed by the computer in accordance with the program also includes processing that is executed in parallel or individually (for example, parallel processing or processing by an object). Furthermore, the program may be processed by one computer (processor) or subjected to distribution processing by a plurality of computers.

Note that embodiments of the present technology are not limited to the above-described embodiments, and various modifications are possible without departing from the gist of the present technology.

Furthermore, the present technology can have the following configuration.

(1) An information processing apparatus including:
   a viewing history processing unit that generates viewing history information associated with a viewing history of content of digital broadcasting, the viewing history information including device information indicating whether a device that has reproduced the content is a device capable of processing data conforming to a standard for the digital broadcasting.
(2) The information processing apparatus according to (1), in which
   the viewing history information includes information unique to a compliant device compliant with the standard for the digital broadcasting or a non-compliant device not compliant with the standard for the digital broadcasting, as the device information.
(3) The information processing apparatus according to (2), in which
   the unique information is information included in a user agent of a Hypertext Transfer Protocol (HTTP) request.
(4) The information processing apparatus according to (3), in which
   the unique information further includes an Internet Protocol (IP) address in a case where the HTTP request is from the non-compliant device.
(5) The information processing apparatus according to (3) or (4), in which
   the user agent includes at least information associated with an operating system (OS: Operating System) and information indicating whether the compliant device or the non-compliant device is a mobile terminal.
(6) The information processing apparatus according to (4), further including:
   a receiving unit that receives a broadcast wave of the digital broadcasting;
   a data processing unit that processes data conforming to the standard for the digital broadcasting obtained from the broadcast wave; and
   a communication unit that sends the data from the data processing unit to the non-compliant device via a network in response to a HTTP request sent from the non-compliant device, in which
   for a viewing history of the content reproduced by the non-compliant device, the viewing history processing unit generates the viewing history information in which information included in a user agent obtained from a HTTP request from the non-compliant device and an IP address assigned to the non-compliant device are associated with each other.
(7) The information processing apparatus according to any one of (3) to (6), in which
   the viewing history processing unit is implemented as a module of a HTTP proxy server.
(8) The information processing apparatus according to any one of (2) to (6), in which
   in the compliant device or the non-compliant device, the content is reproduced on a browser.
(9) The information processing apparatus according to (6), in which
   the communication unit sends the viewing history information via the network to a viewing history server that collects the viewing history information.
(10) The information processing apparatus according to any one of (6) to (9) further including:
   a reproducing unit that reproduces the data from the data processing unit.
(11) An information processing method for an information processing apparatus including:
   a step in which the information processing apparatus
   generates viewing history information associated with viewing history of content of digital broadcasting, the viewing history information including device information indicating whether a device that has reproduced the content is a device capable of processing data conforming to a standard for the digital broadcasting.
(12) An information processing apparatus including:
   a receiving unit that receives viewing history information associated with a viewing history of content of digital broadcasting, the viewing history information including device information indicating whether a device that has reproduced the content is a device capable of processing data conforming to a standard for the digital broadcasting; and
   a processing unit that collects the viewing history information from a plurality of devices and processes the plurality of pieces of collected viewing history information in response to the device information.
(13) The information processing apparatus according to (12), in which
   the viewing history information includes information unique to a compliant device compliant with the standard for the digital broadcasting or a non-compliant device not compliant with the standard for the digital broadcasting, as the device information.
(14) The information processing apparatus according to (13), in which
   the unique information is information included in a user agent of a HTTP request.
(15) The information processing apparatus according to (14), in which
   the unique information further includes an IP address in a case where the HTTP request is from the non-compliant device.
(16) The information processing apparatus according to (13) or (14), in which
   the user agent includes at least information associated with an operating system (OS) and information indicating whether the compliant device or the non-compliant device is a mobile terminal.
(17) An information processing method for an information processing apparatus including:
   a step in which the information processing apparatus
   receives viewing history information associated with a viewing history of content of digital broadcasting, the viewing history information including device information indicating whether a device that has reproduced the content is a device capable of processing data conforming to a standard for the digital broadcasting,
   collects the viewing history information from a plurality of devices and processes the plurality of pieces of collected viewing history information in response to the device information.

### REFERENCE SIGNS LIST

- 10: Sending system
- 20: Compliant client device
- 30: Non-compliant client device
- 50: Relay station
- 60: Internet
- 70: LAN
- 200: Control unit
- 201: Broadcast middleware
- 202: HTTP proxy server
- 203: Browser
- 204-1, 204-2: Communication I/F
- 211: PHY/MAC processing unit
- 212: LLS retriever
- 213: LLS parser
- 214: SLS retriever
- 215: SLS parser
- 216: Segment retriever
- 221: Proxy cache
- 222: Proxy cache
- 223: Broadcast/communication address resolver
- 231: DASH client
- 232: Decoder
- 233: Renderer
- 241: MPD retriever
- 242: MPD parser
- 243: Segment retriever
- 244: MP4 parser
- 300: Control unit
- 301: Communication I/F
- 302: Browser
- 311: DASH client
- 312: Decoder
- 313: Renderer
- 321: MPD retriever
- 322: MPD parser
- 323: Segment retriever
- 324: MP4 parser
- 1000: Computer
- 1001: CPU

## Claims

1. An information processing apparatus comprising:
a viewing history processing unit that generates viewing history information associated with a viewing history of content of digital broadcasting, the viewing history information including device information indicating whether a device that has reproduced the content is a device capable of processing data conforming to a standard for the digital broadcasting.

2. The information processing apparatus according to claim 1, wherein
the viewing history information includes information unique to a compliant device compliant with the standard for the digital broadcasting or a non-compliant device not compliant with the standard for the digital broadcasting, as the device information.

3. The information processing apparatus according to claim 2, wherein
the unique information is information included in a user agent of a Hypertext Transfer Protocol (HTTP) request.

4. The information processing apparatus according to claim 3, wherein
the unique information further includes an Internet Protocol (IP) address in a case where the HTTP request is from the non-compliant device.

5. The information processing apparatus according to claim 3, wherein
the user agent includes at least information associated with an operating system (OS: Operating System) and information indicating whether the compliant device or the non-compliant device is a mobile terminal.

6. The information processing apparatus according to claim 4, further comprising:
a receiving unit that receives a broadcast wave of the digital broadcasting;
a data processing unit that processes data conforming to the standard for the digital broadcasting obtained from the broadcast wave; and
a communication unit that sends the data from the data processing unit to the non-compliant device via a network in response to a HTTP request sent from the non-compliant device, wherein
for a viewing history of the content reproduced by the non-compliant device, the viewing history processing unit generates the viewing history information in which information included in a user agent obtained from a HTTP request from the non-compliant device and an IP address assigned to the non-compliant device are associated with each other.

7. The information processing apparatus according to claim 6 wherein,
the viewing history processing unit is implemented as a module of a HTTP proxy server.

8. The information processing apparatus according to claim 6, wherein
in the compliant device or the non-compliant device, the content is reproduced on a browser.

9. The information processing apparatus according to claim 6, wherein
the communication unit sends the viewing history information via the network to a viewing history server that collects the viewing history information.

10. The information processing apparatus according to claim 6 further comprising:
a reproducing unit that reproduces the data from the data processing unit.

11. An information processing method for an information processing apparatus comprising:
a step in which the information processing apparatus
generates viewing history information associated with viewing history of content of digital broadcasting, the viewing history information including device information indicating whether a device that has reproduced the content is a device capable of processing data conforming to a standard for the digital broadcasting.

12. An information processing apparatus comprising:
a receiving unit that receives viewing history information associated with a viewing history of content of digital broadcasting, the viewing history information including device information indicating whether a device that has reproduced the content is a device capable of processing data conforming to a standard for the digital broadcasting; and
a processing unit that collects the viewing history information from a plurality of devices and processes the plurality of pieces of collected viewing history information in response to the device information.

13. The information processing apparatus according to claim 12, wherein
the viewing history information includes information unique to a compliant device compliant with the standard for the digital broadcasting or a non-compliant device not compliant with the standard for the digital broadcasting, as the device information.

14. The information processing apparatus according to claim 13, wherein
the unique information is information included in a user agent of a HTTP request.

15. The information processing apparatus according to claim 14), wherein
the unique information further includes an IP address in a case where the HTTP request is from the non-compliant device.

16. The information processing apparatus according to claim 14, wherein
the user agent includes at least information associated with an operating system (OS) and information indicating whether the compliant device or the non-compliant device is a mobile terminal.

17. An information processing method for an information processing apparatus comprising:
a step in which the information processing apparatus
receives viewing history information associated with a viewing history of content of digital broadcasting, the viewing history information including device information indicating whether a device that has reproduced the content is a device capable of processing data conforming to a standard for the digital broadcasting,
collects the viewing history information from a plurality of devices and processes the plurality of pieces of collected viewing history information in response to the device information.
